# EUROPEAN PATENT APPLICATION

(11) **EP 4 811 698 A1**
(43) Date of publication of application: **23.09.2026**
(21) Application number: 23958481.6
(22) Date of filing: 13.11.2023
(51) Int. Cl.: H04L 5/00

(54) **UPLINK TRANSMISSION METHODS, TERMINAL DEVICES AND NETWORK DEVICES**

(71) Applicant: GUANGDONG OPPO MOBILE TELECOMMUNICATIONS CORP., LTD., Dongguan, Guangdong 523860 (CN)
(72) Inventor: LIU, Wendong, Dongguan, Guangdong 523860 (CN)
(74) Representative: Taor, Simon Edward William
(86) International application number: PCT/CN2023/131218
(87) International publication number: WO 2025/102194

(57) **Abstract**

Provided are uplink transmission methods, terminal devices and network devices. A method includes: a terminal device transmits a first channel, the first channel being configured to carry UCI, the UCI including CSI, the first channel including a first resource and a second resource, the first resource being configured to carry a first part of information in the CSI, the second resource being configured to carry a second part of information in the CSI, and the second part of information being determined based on an output sequence of a first model.

## Description

### TECHNICAL FIELD

The present disclosure relates to the technical field of communication, and more particularly, to uplink transmission methods, terminal devices, and network devices.

### BACKGROUND

With the development of communication technology, some new model-based channel state information (CSI) feedback schemes are gradually proposed, such as ajoint source-channel coding CSI feedback scheme based on artificial intelligence (AI). In view of the above CSI feedback schemes, how to perform uplink transmission is a problem to be solved.

### SUMMARY

Embodiments of the present disclosure provide uplink transmission methods, terminal devices, and network devices. Hereinafter, various aspects related to embodiments of the present disclosure will be described in detail.

According to a first aspect, there is provided a method of uplink transmission, including that: a terminal device transmits a first channel for carrying uplink control information (UCI), the UCI including CSI, the first channel including a first resource for carrying a first part of information in the CSI and a second resource for carrying a second part of information in the CSI, and the second part of information being determined based on an output sequence of a first model.

According to a second aspect, there is provided a method of uplink transmission, including that: a network device receives a first channel transmitted by a terminal device, the first channel being configured to carry UCI, the UCI including CSI, the first channel including a first resource and a second resource, the first resource being configured to carry a first part of information in the CSI, and the second resource being configured to carry a second part of information in the CSI, and the second part of information being determined based on an output sequence of a first model.

According to a third aspect, there is provided a terminal device, including a communication module configured to transmit a first channel for carrying UCI, the UCI including CSI, the first channel including a first resource for carrying a first part of information in the CSI and a second resource for carrying a second part of information in the CSI, and the second part of information being determined based on an output sequence of a first model.

According to a fourth aspect, there is provided a network device, including a communication module configured to receive a first channel transmitted by a terminal device, the first channel being configured to carry UCI, the UCI including CSI, the first channel including a first resource and a second resource, the first resource being configured to carry a first part of information in the CSI, the second resource being configured to carry a second part of information in the CSI, and the second part of information being determined based on an output sequence of a first model.

According to a fifth aspect, there is provided a terminal device, including: a memory for storing a program, and a transceiver for calling the program in the memory and controlling the transceiver to receive or transmit a signal to cause the terminal device to perform the method of the first aspect.

According to a sixth aspect, there is provided a network device, including: a memory for storing a program, and a transceiver for calling the program in the memory and controlling the transceiver to receive or transmit a signal to cause the network device to perform the method of the second aspect.

According to a seventh aspect, there is provided an apparatus including a processor for calling a program from a memory to cause the apparatus to perform the method of the first or second aspect.

According to an eighth aspect, there is provided a chip including a processor for calling a program from a memory to cause an apparatus on which the chip is mounted to perform the method of the first or second aspect.

According to a ninth aspect, there is provided a computer-readable storage medium having stored thereon a program that causes a computer to perform the method of the first or second aspect.

According to a tenth aspect, there is provided a computer program product including a program that causes a computer to perform the method of the first or second aspect.

According to an eleventh aspect, there is provided a computer program that causes a computer to perform the method of the first or second aspect.

In the embodiments of the present disclosure, CSI is divided into two parts of information (one part of which is information determined based on a model), and the two parts of information are carried in different resources of a first channel. In this way, a dedicated CSI reporting method may be designed for the information determined based on the model, so that the model-based CSI feedback scheme is supported.

### BRIEF DESCRIPTION OF THE DRAWINGS

FIG. 1 is an example diagram of a system architecture of a wireless communication system to which an embodiment of the present disclosure is applicable.
FIG. 2 is a schematic diagram of a neuron to which an embodiment of the present disclosure is applicable.
FIG. 3 is a schematic diagram of a neural network to which an embodiment of the present disclosure is applicable.
FIG. 4 is a schematic diagram of a convolutional neural network to which an embodiment of the present disclosure is applicable.
FIG. 5 is a schematic diagram of a long short-term memory model to which an embodiment of the present disclosure is applicable.
FIG. 6 is an example diagram of a feedback framework of an AI-based CSI feedback scheme.
FIG. 7 is an example of a feedback framework of an AI-based joint source-channel coding CSI feedback scheme.
FIG. 8 is a schematic flow diagram of a method of uplink transmission according to an embodiment of the present disclosure.
FIG. 9 is a schematic flow diagram of a configuration manner of uplink transmission according to an embodiment of the present disclosure.
FIG. 10 is an exemplary diagram of a switching mode of a first model according to an embodiment of the present disclosure.
FIG. 11 is an exemplary diagram of a switching mode of a first model according to another embodiment of the present disclosure.
FIG. 12 is a schematic structural diagram of a terminal device according to an embodiment of the present disclosure.
FIG. 13 is a schematic structural diagram of a network device according to an embodiment of the present disclosure.
FIG. 14 is a schematic structural diagram of an apparatus to which an embodiment of the present disclosure is applicable.

### DETAILED DESCRIPTION

The technical solutions in the present disclosure will be described below with reference to the accompanying drawings.

### Communication system architecture

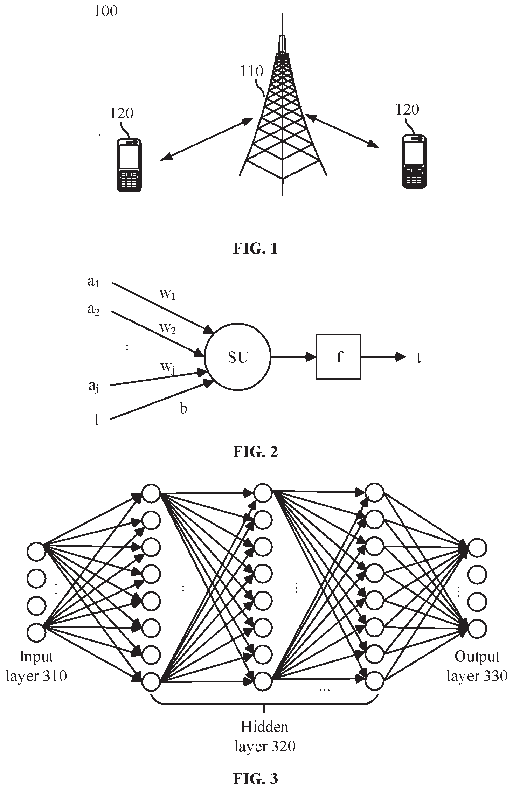

FIG. 1 is an example diagram of a system architecture of a wireless communication system 100 to which an embodiment of the present disclosure is applicable. The wireless communication system 100 may include a network device 110 and a terminal device 120. The network device 110 may be a device that communicates with the terminal device 120. The network device 110 may provide communication coverage for a particular geographic area and may communicate with the terminal device 120 located within the coverage area.

FIG. 1 exemplarily shows one network device and one terminal device, and optionally, the wireless communication system 100 may include one or more network devices 110 and/or one or more terminal devices 120. For one network device 110, the one or more terminal devices 120 may all be located within the network coverage range of the network device 110, or may all be located outside the network coverage range of the network device 110, or may be partially located within the coverage range of the network device 110 with the other part of the terminal devices being located outside the network coverage range of the network device 110, which is not limited in the embodiments of the present disclosure.

Optionally, the wireless communication system 100 may further include other network entities such as a network controller and a mobility management entity, and the embodiments of the present disclosure are not limited thereto.

It should be understood that the technical solutions of the embodiments of the present disclosure are applicable to various communication systems, such as a fifth generation (5G) system or a new radio (NR) system, a long term evolution (LTE) system, an LTE frequency division duplex (FDD) system, an LTE time division duplex (TDD), and the like. The technical solution provided in the present disclosure can also be applied to future communication systems, such as a sixth generation mobile communication system, a satellite communication system, and the like.

The terminal device in the embodiments of the present disclosure may also be referred to as a user equipment (UE), an access terminal, a subscriber unit, a subscriber station, a mobile station, a mobile station (MS), a mobile terminal (MT), a remote station, a remote terminal, a mobile device, a user terminal, a terminal, a wireless communication device, a user agent, or a user device. The terminal device in the embodiments of the present disclosure may be a device that provides voice and/or data connectivity to a user and may be used to connect people, objects, and machines, for example, a handheld device having a wireless connection function, a vehicle-mounted device, or the like. The terminal device in the embodiments of the present disclosure may be a mobile phone, a tablet (Pad), a notebook computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, or the like. Alternatively, a UE may be used to act as a base station. For example, a UE may act as a scheduling entity that provides sidelink signals between UEs in V2X or D2D, etc. For example, cellular telephones and automobiles communicate with each other using sidelink signals. Communication may be performed between cellular phones and smart home devices without relaying communication signals through base stations.

The network device in the embodiments of the present disclosure may be a device for communicating with a terminal device, and the network device may also be referred to as an access network device or a radio access network device, for example, the network device may be a base station. The network device in the embodiments of the present disclosure may refer to a radio access network (RAN) node (or device) that may connect the terminal device to a wireless network. The base station may broadly cover or be replaced with various names such as a NodeB, an evolved NodeB, a next generation base station, a relay station, an access point, a transmitting and receiving point (TRP), a transmitting point (TP), a main station (MeNB), a secondary station (SeNB), a Multi-Standard Radio (MSR) node, a home base station, a network controller, an access node, a radio point, an access point, a transmitting node, a transceivng node, a base band unit (BBU), a remote radio unit (RRU), an active antenna unit (AAU), a remote radio head (RRH), a central unit (CU), a distributed unit (DU), a positioning node, and the like. The base station may be a macro base station, a micro base station, a relay node, a donor node, or the like, or a combination thereof. The base station may also refer to a communication module, modem, or chip for disposal within the aforementioned devices or apparatuses. The base station may also be a mobile switching center, a device that functions as a base station in device-to-device (D2D), a vehicle-to-everything (V2X), machine-to-machine (M2M) communication, a network-side device in a 6G network, a device that functions as a base station in a future communication system, or the like. The base station may support networks of the same or different access technologies. The embodiments of the present disclosure do not limit the specific technology and the specific device form adopted by the network device.

The base station may be fixed or mobile. For example, a helicopter or drone may be configured to act as a mobile base station, and one or more cells may move according to the location of the mobile base station. In other examples, a helicopter or drone may be configured as a device to communicate with another base station.

In some deployments, the network device in the embodiments of the present disclosure may refer to a CU or a DU, or the network device includes a CU and a DU. A gNB may also include an AAU.

Network devices and terminal devices can be deployed on land, including indoor or outdoor, handheld or vehicle-mounted; they can also be deployed on the water; they can also be deployed on aircraft, balloons and satellites in the air. In the embodiments of the present disclosure, the scenario in which the network devices and the terminal devices are located is not limited.

It should be understood that all or part of the functionality of the communication device in the present disclosure may also be implemented by software functionality which is run on hardware, or by virtualization functionality which is instantiated on a platform, such as a cloud platform.

### Neural network

In recent years, artificial intelligence research represented by neural network has made great achievements in many fields, and it will also play an important role in people's production and life in the long future. Neural network can be understood as an operation model composed of multiple neuron nodes connected to each other, in which the connection between nodes may represent the weighted values from input signals to the output signals, usually called weight. Each node performs a weighted summation of different input signals and outputs them through a specific activation function.

Referring to FIG. 2, neurons may implement nonlinear mapping depending on an activation function, where the input of the neuron may be denoted A, each dimension of the input is denoted aj, and the corresponding weight is denoted wj, together with summation units (SU) to enhance or weaken the input. In addition, the output of the SU may be input into the activation function f to obtain the output t, where the values of j are 1, 2,..., n.

Common neural networks include convolutional neural network (CNN), recurrent neural network (RNN), deep neural network (DNN), etc.

Hereinafter, a neural network applicable to the embodiment of the present disclosure will be described with reference to FIG. 3. The neural network shown in FIG. 3 can be divided into three categories according to the locations of different layers: an input layer 310, a hidden layer 320, and an output layer 330. Generally, the first layer is the input layer 310, the last layer is the output layer 330, and the intermediate layer between the first layer and the last layer is the hidden layer 320.

The input layer 310 is used for input data, and the input data may for example be a received signal received by a receiver. The hidden layer 320 is used to process the input data, for example, to decompress the received signal. The output layer 330 is used to output processed output data, for example, to output a decompressed signal.

As shown in FIG. 3, the neural network includes a plurality of layers, each layer includes a plurality of neurons, and the neurons between the layers may be fully connected or partially connected. For connected neurons, the output of the neurons of a layer may be used as the input of the neurons of the next layer.

With the continuous development of neural network research, neural network deep learning algorithms have been proposed in recent years, introducing more hidden layers into neural networks to form a DNN. More hidden layers allow a DNN to better describe complex situations in the real world. Theoretically, the more parameters a model has, the higher the complexity and the greater the "capacity", which means that it can complete more complex learning tasks. Such a neural network model is widely used in pattern recognition, signal processing, optimization combination, anomaly detection and so on.

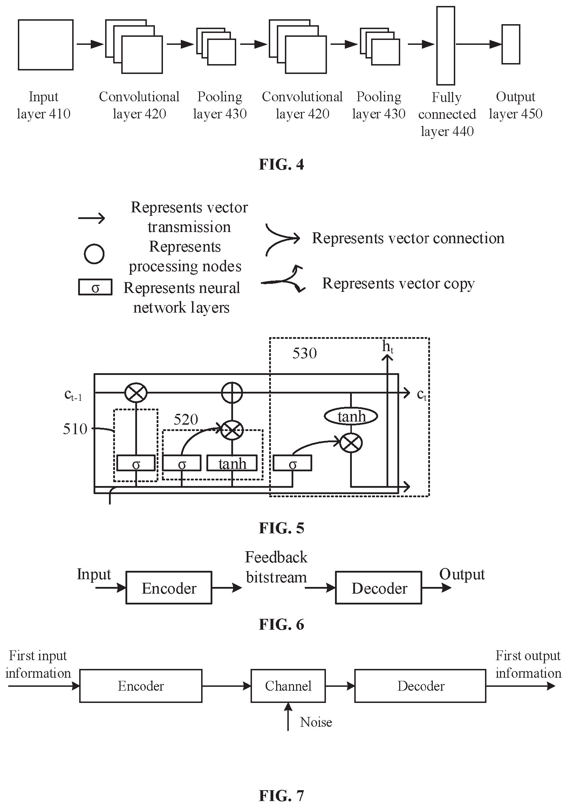

A CNN is a deep neural network with a convolutional structure. The structure of the CNN is shown in FIG. 4, which may include an input layer 410, a convolutional layer 420, a pooling layer 430, a fully connected layer 440, and an output layer 450.

Each convolution layer 420 may include a plurality of convolution operators, also referred to as kernels, which may function as a filter for extracting specific information from an input signal. The convolution operator may essentially be a weight matrix, which is typically predefined.

To obtain the weight values in these weight matrices, a lot of training is needed in practical applications. Each weight matrix formed by the trained weight values can extract information from input signals, thus helping the CNN to make correct predictions.

When the CNN has multiple convolutional layers, the initial convolutional layer usually may extract more general features which can also be called low-level features. As the depth of the CNN deepens, the features extracted from subsequent convolutional layers become more and more complex.

Regarding the pooling layer 430, since it is often necessary to reduce the number of training parameters, it is often required to periodically introduce a pooling layer after the convolutional layer. For example, it may be a convolutional layer followed by a pooling layer as shown in FIG. 4, or it may be a plurality of convolutional layers followed by one or more pooling layers. In the process of signal processing, the sole purpose of the pooling layer is to reduce the space size of the extracted information.

The fully connected layer 440 is needed since after processing by the convolutional layer 420 and the pooling layer 430, the CNN is not sufficient to output the required output information. As mentioned earlier, the convolutional layer 420 and the pooling layer 430 can only extract features and reduce parameters brought by the input data. However, in order to generate the final output information (e.g., a bitstream of raw information transmitted by a transmitter), the CNN further needs to utilize the fully connected layer 440. Generally, the fully connected layer 440 may include a plurality of hidden layers, and the parameters included in the plurality of hidden layers may be pre-trained according to relevant training data of a specific task type, for example, the task type may include decoding data signals received by a receiver, or for example, the task type may further include channel estimation based on pilot signals received by the receiver.

After the plurality of hidden layers in the fully connected layer 440 is the output layer 450, that is, the last layer of the entire CNN is the output layer 450 for outputting results. Typically, the output layer 450 is provided with a loss function (e.g., a loss function similar to classification cross entropy) for calculating a prediction error or for evaluating the degree of difference between a result output by the CNN model (also known as a predicted value) and an expected result (also known as a true value).

In order to minimize the loss function, the CNN model needs to be trained. In some implementations, the CNN model may be trained using a backpropagation algorithm (BP). The training process of BP consists of a forward propagation process and a back propagation process. In the process of forward propagation (as shown in Figure 4, the propagation from 410 to 450 is forward propagation), input data is input into the above layers of the CNN model, processed layer by layer, and transmitted to the output layer. If the output result from the output layer is quite different from the expected result, the minimization of the above loss function is set as an optimization objective, and back propagation is initiated (as shown in Figure 4, the propagation from 450 to 410 is back propagation). The partial derivative of the optimization objective with respect to the weight of each neuron is computed layer by layer to form the gradient of the optimization objective with respect to the weight vector, which serves as as the basis for modifying the model weight. The training process of the CNN is completed in the weight modification process. When the above error reaches the expected value, the training process of the CNN ends.

It should be noted that the CNN shown in FIG. 4 is only an example of a convolutional neural network. In a specific application, the convolutional neural network may also exist in the form of other network models, and the embodiments of the present disclosure do not limit this.

The purpose of RNNs is to process sequence data. In the traditional neural network model (for example, in the CNN model), from the input layer to the hidden layer to the output layer, the layers are fully connected, and the nodes between each layer are unconnected. However, such an ordinary neural network is incapable of solving many problems. For example, if you want to predict what the next word in a sentence will be, you usually need to use the previous word, because the words before and after in a sentence are not independent. The reason why RNNs are called recurrent neural networks is that the current output of a sequence is also related to the previous output. The specific manifestation is that the network may memorize the previous information and apply it to the calculation of the current output, that is, the nodes between the hidden layers are no longer unconnected but are connected, and the input of the hidden layer includes not only the output of the input layer but also the output of the hidden layer at the previous moment. Theoretically, RNNs are capable of processing sequence data of any length.

The training of RNN is the same as that of traditional ANN (Artificial Neural Network). The BP error backpropagation algorithm is also used, but with one difference. If RNNs are unrolled in time, the parameters W, U, and V are shared, whereas this is not the case for traditional neural networks. Furthermore, in the gradient descent algorithm, the output at each step depends not only on the network at the current step but also on the states of the network at several previous steps. For example, at t=4, back propagation is still required for three steps, and gradients are required to be added for each of the three subsequent steps. This learning algorithm is known as Back Propagation Through Time (BPTT).

Given the existence of artificial neural networks and convolutional neural networks, why are recurrent neural networks still needed? The reason is simple. Both convolutional neural networks and artificial neural networks are based on the premise that elements are independent of each other, and inputs and outputs are also independent, such as cats and dogs. However, in the real world, many elements are interconnected, such as the change of stock prices over time. For example, when a person says: "I like traveling. My favorite place is Yunnan, and I will definitely go to __if I get a chance." Anyone can fill in the blank with "Yunnan", because we infer it from the context. However, it is quite difficult for a machine to achieve this. Therefore, the recurrent neural network emerged. Its essence is to possess memory capability like humans. Thus, its output depends on both the current input and the memory.

At present, to address the problems of exploding or vanishing gradients in RNNs, variants have been developed on the basis of RNNs, resulting in the Long Short-Term Memory (LSTM) model. Referring to FIG. 5, LSTM introduces a new memory unit cₜ (also referred to as "cell state"), which is used for linear cyclic information transmission and outputs information to the external state hₜ of the hidden layer. At each time step t, cₜ records historical information up to the current moment. Different from RNNs that only consider the most recent states, the memory cell determines which states should be retained and which should be forgotten, thus overcoming the defects of traditional RNNs in long-term memory.

With continued reference to FIG. 5, to implement the above state selection, the memory cell introduces a gating mechanism to control the path of information transfer, similar to a gate in a data circuit, where "0" represents closed and "1" represents open. The memory cell includes a forget gate 510, an input gate 520, and an output gate 530. The forget gate controls how much information needs to be forgotten from the memory cell cₜ₋₁ at the previous moment; the input gate controls how much information from the candidate state c^t at the current moment needs to be stored; and the output gate controls how much information from the memory cell cₜ at the current moment needs to be output to the external state ht.

### AI-based CSI feedback

In view of the great success of AI technologies, especially deep learning technologies, in computer vision, natural language processing, and other fields, the communications field has begun to adopt AI technologies to solve technical challenges that are difficult to address with traditional communication methods. The common neural network architectures used in deep learning are nonlinear and data-driven, which can extract features from actual channel matrix data and restore, at the network device side, the channel matrix information compressed and fed back by the terminal device as accurately as possible. An AI-based CSI feedback scheme ensures the recovery of channel information while providing the possibility of reducing CSI feedback overhead for terminal devices. AI-based CSI feedback treats channel information as an image to be compressed, uses a deep learning autoencoder to compress and feed back the input channel information, and reconstructs the compressed channel information at the transmitter side, thereby preserving channel information to a greater extent.

In the ongoing R18 discussions, AI-based CSI feedback, as one of the main use cases of the AI work item in R18, has attracted extensive attention from various companies, and multiple rounds of simulation assumptions and discussions on potential standard impacts have been conducted. Although the details of how to implement AI-based CSI feedback still need further discussion in R19, a consensus has been reached on its basic implementation framework.

In an AI-based CSI feedback scheme, the entire feedback system is divided into an encoder part and a decoder part, which are deployed at the terminal device side (transmitter) and the network device side (receiver), respectively. After obtaining channel information through channel estimation, the terminal device uses it as the input of the encoder, compresses and encodes the channel information matrix through the neural network of the encoder, and feeds back the compressed bitstream to the network device via the air-interface feedback link. The network device uses the decoder to recover the channel information according to the feedback bitstream, so as to output complete channel information. Both the encoder and the decoder shown in FIG. 6 may adopt neural networks. Such neural networks may adopt CNN or DNN, RNN with structures such as LSTM and Gate Recurrent Unit (GRU), or various neural network architectures such as residual networks and self-attention mechanisms to improve the performance of the encoder and the decoder.

In an AI-based CSI feedback scheme, both the input and output of CSI may be full channel information, or feature vectors derived from full channel information. Therefore, current AI-based CSI feedback schemes are mainly divided into full-channel-information-based feedback schemes and feature-vector-based feedback schemes. Although the former can realize compression and feedback of full channel information, it incurs high feedback bitstream overhead. Thus, full-channel-information-based feedback schemes are not supported in NR systems. Feature-vector-based feedback schemes are supported in current NR systems. Compared with traditional schemes (model-free CSI feedback schemes), feature-vector-based feedback schemes can achieve higher CSI feedback accuracy with the same feedback overhead, or significantly reduce feedback overhead while achieving the same CSI feedback accuracy.

In addition to the AI-based CSI feedback schemes discussed in R18, there is another category of AI-based joint source-channel CSI feedback schemes. As shown in FIG. 7, in an AI-based joint source-channel CSI feedback scheme, the influence of noise is considered in the CSI feedback process. In actual use, the encoder deployed at the terminal device implicitly implements CSI compression, channel coding, and modulation; the decoder at the network device implicitly implements demodulation, channel decoding, and CSI recovery.

An AI-based joint source-channel CSI feedback scheme can take the influence of noise into account and jointly implement source-channel coding, thereby combining the lossy source coding process of CSI compression with the redundancy-adding process of channel coding. This further optimizes the anti-noise performance of the CSI encoder and CSI decoder under non-ideal channels when uplink feedback resources are limited, and significantly improves CSI feedback performance in low signal-to-noise ratio environments.

AI-based joint source-channel CSI feedback schemes have not yet been discussed in R18 and R19, but have attracted attention in academia and may be discussed in future sixth-generation (6G) mobile communication systems. Therefore, further attention and research are required on how to standardize AI-based joint source-channel CSI feedback schemes.

### UCI transmission procedure

In certain communication protocols (such as the NR protocol), UCI needs to be transmitted to a network device via a Physical Uplink Control Channel (PUCCH) or a Physical Uplink Shared Channel (PUSCH). The UCI generally includes Hybrid Automatic Repeat Request-Acknowledgement (HARQ-ACK), Scheduling Request (SR), and CSI. The CSI includes one or more of Rank Indicator (RI), Layer Indicator (LI), Channel Quality Indicator (CQI), Precoding Matrix Indicator (PMI), and the like.

The process of carrying UCI through PUCCH generally includes the following steps.

Step 1: UCI bit sequence generation. Step 1 needs to generate the specific content of UCI. For example, the UCI may contain only HARQ-ACK or SR. Alternatively, the UCI may include only the CSI. Alternatively, the UCI may include HARQ-ACK, SR, and CSI. In this step, a terminal device arranges the UCI to be transmitted into a bit stream in the order of HARQ-ACK, SR, and CSI.

Step 2: Code block segmentation and Cyclic Redundancy Check (CRC) attachment. Whether code block segmentation and CRC attachment are required is determined according to the length A of a UCI bit sequence. For example, when A≥12 bits, code block segmentation and CRC attachment are performed on the bitstream generated in Step 1, and polar coding is adopted; when A<12, code block segmentation and CRC attachment are not required, and channel coding is directly performed using a small code block.

Step 3: Channel coding. Channel coding is performed on the sequence generated in Step 2.

Step 4: Rate matching and resource mapping. Rate matching is performed on the channel-coded sequence, modulation is performed using Quadrature Phase Shift Keying (QPSK) or π/2-Binary Phase Shift Keying (BPSK), and the modulated signal is mapped to corresponding PUCCH resources.

For detailed steps of the above procedure and specific implementations of channel coding and rate matching, reference may be made to Section 6.3.1 of 3rd Generation Partnership Project (3GPP) TS 38.212. For CSI transmission, PUCCH supports periodic CSI (P-CSI) and semi-persistent CSI (SP-CSI) transmission, as detailed in Table 1 below.

**Table 1 CSI Reporting Carried by PUCCH**

| Physical channel | Frequency domain granularity | CSI structure | Time domain property | Codebook Type |
|---|---|---|---|---|
| Short PUCCH | Wideband | Non-split | Periodic, semi-persistent | TypeI |
| Long PUCCH | Wideband | Non-split | Periodic, semi-persistent | TypeI |
| Long PUCCH | Sub-band | Part1+Part2 | semi-persistent | TypeI |
| Long PUCCH | Wideband | Part1 | semi-persistent | TypeII |

The transmission process of UCI on a PUSCH is similar to that on a PUCCH. For detailed steps of the transmission process and specific implementation methods of channel coding and rate matching, reference may be made to Section 6.3.2 of 3GPP TS 38.212. The PUSCH may carry SP-CSI and aperiodic CSI (A-CSI), as detailed in Table 2 below.

**Table 2 CSI Carried by PUSCH**

| Physical channel | Frequency domain granularity | CSI structure | Time domain property | Codebook Type |
|---|---|---|---|---|
| PUSCH | Wideband/ Sub-band | Part1+Part2 | Semi-continuous, aperiodic | TypeI/II |

It should be understood that SP-CSI cannot be multiplexed with uplink data, while A-CSI can be multiplexed with uplink data. To ensure the efficiency of PUSCH resource allocation, subband-based CSI reporting may be adopted. During CSI reporting, a terminal device may discard some resource blocks according to the allocated PUSCH resources in ascending order of priority. The terminal device may divide the subband part of Part 2 of each CSI into an even subband part and an odd subband part, each part constituting a CSI block, wherein the even subband has higher priority than the odd subband.

Conventional CSI feedback schemes (such as codebook-based CSI feedback schemes) usually assume ideal CSI feedback during system-level and link-level performance evaluation. That is to say, it is assumed that there is no error in the CSI feedback process, and a network device can perfectly decode a bitstream carrying CSI and recover the CSI.

However, such ideal assumption cannot be achieved in an actual system. For example, in a communication system, CSI is reported via a PUCCH or a PUSCH. For CSI feedback based on Type I and Type II codebooks, taking PUSCH reporting as an example, original CSI is converted into a bitstream after codebook processing, transmitted together with data information through channel coding, and sent via a PUSCH. In the above CSI feedback process, affected by noise, a network device may fail in decoding the PUSCH, so a HARQ retransmission mechanism needs to be triggered to ensure correct decoding of the PUSCH. Especially in low SNR scenarios such as cell edge and link blockage, the probability of CSI feedback error may be high. The network device can only decode the correct CSI after one or more retransmissions, and perform downlink transmission based on the CSI. Multiple retransmissions introduce large delay, so that when downlink transmission is performed based on the decoded CSI, the downlink channel may have changed, resulting in poor downlink transmission performance.

An AI-based CSI feedback scheme can significantly improve the accuracy of CSI recovery and reduce CSI feedback overhead. However, the AI-based CSI feedback scheme discussed in Release 18 also assumes ideal feedback and does not consider the impact of noise. Therefore, it faces the same problems as the conventional codebook-based CSI feedback scheme, which will not be repeated here.

On the other hand, although an AI-based joint source-channel coding CSI feedback scheme can significantly improve the performance of CSI feedback under non-ideal feedback conditions, the scheme may not explicitly undergo channel coding, symbol modulation and other processes. The above channel coding and symbol modulation processes are implicitly implemented by a joint source-channeLencoder at the terminal device side. As a result, the transmission procedure of UCI on a PUCCH and a PUSCH in a conventional communication system cannot be directly reused in this CSI feedback scheme.

As can be seen from the foregoing description, with the development of communication technologies, some new model-based CSI feedback schemes have been gradually proposed, such as an AI-based joint source-channel coding CSI feedback scheme. For the above CSI feedback scheme, how to perform uplink transmission is a problem to be solved. Embodiments of the present disclosure are described in detail below with respect to the above problem.

### Embodiment 1: Method of Uplink Transmission

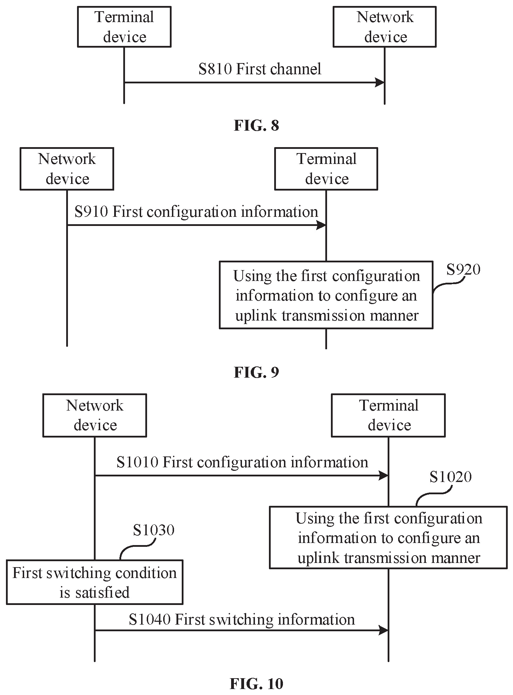

FIG. 8 is a schematic flowchart of a method of uplink transmission provided in Embodiment 1. The method of FIG. 8 is described from the perspective of interaction between a terminal device and a network device. The terminal device and the network device may be, for example, the terminal device 120 and the network device 110 in FIG. 1.

In step S810, a terminal device transmits a first channel. The first channel may be configured to carry UCI. For example, the first channel is a PUCCH. For another example, the first channel is a PUSCH. It should be understood that "a terminal device transmits a first channel" may be understood as the terminal device transmitting information carried in the first channel. Therefore, the step S810 may also be understood as or replaced by: the terminal device transmits UCI via the first channel.

UCI carried in the first channel may include CSI. For example, the first channel is a PUCCH, and the CSI may be periodic CSI or semi-persistent CSI. For another example, the first channel is a PUSCH, and the CSI may be semi-persistent CSI or aperiodic CSI. The CSI may include one or more of a PMI, an RI, a CQI, an LI, for example.

The first channel may include a first resource and a second resource. The first resource may be configured to carry a first part of information in the CSI. The second resource may be configured to carry a second part of information in the CSI. In other words, the information in the CSI may be divided into two parts of information, which are respectively carried in different resources of the first channel.

The first part of information may include one or more of the following, for example: an RI, a CQI, an LI. In some implementations, in addition to CSI-related information, the first resource may be also configured to carry first information other than the CSI. The first information may include one or more of the following, for example: a HARQ-ACK and an SR.

The second part of information may be information determined based on a first model (or an output sequence of the first model). For example, the output sequence of the first model may include the second part of information. Illustratively, the second part of information may include PMI.

The first model mentioned above may also be referred to as a first function, a first AI/machine learning (ML) function, or a first AI/ML model. The first model may be, for example, an AI-based joint source-channel coding model (or encoder). Alternatively, the first model may also be other algorithms, modules, or a combination of algorithms and modules capable of implementing joint source-channel coding. The use of the first model can significantly improve CSI feedback performance in low SNR scenarios and reduce CSI feedback overhead. The input of the first model may be original CSI. The original CSI may be obtained by measurement of the terminal device. The original CSI may be single-layer information or multi-layer information. The original CSI may be full channel information, subband-level PMI, or wideband-level PMI.

Illustratively, the first model is an AI-based joint source-channel coding model. The second part of information determined based on the first model is a PMI. The PMI has a specific spatial and frequency-domain structure, so that joint source-channel coding can be effectively implemented based on the first model.

Information carried in the first resource and information carried in the second resource may be reported using different reporting modes. For example, the information carried in the first resource is reported in a conventional manner based on the NR protocol. The information carried in the second resource may be reported independently. For example, the process from the information in the first resource to reporting on the first resource includes one or more of the following: code block segmentation, CRC attachment, channel coding, rate matching, symbol modulation, and resource mapping. For another example, the process from the information in the second resource to reporting on the second resource includes performing resource mapping on the output sequence of the first model.

In the embodiments of the present disclosure, the CSI in the UCI is divided into two parts of information, one part of which is determined based on the output sequence of the first model. On this basis, in the embodiments of the present disclosure, the two parts of information are carried in different resources of the first channel respectively. That is to say, the embodiments of the present disclosure adopt a framework in which the second part of information (model-determined information) and other information (first part of information) are reported separately, so that the UCI transmission procedure can support the CSI feedback scheme based on the first model.

The sequence length of the output sequence of the first model usually only supports a limited number of configurations (in other words, the candidate lengths of the output sequence of the first model are usually limited). Therefore, the sequence length of the output sequence of the first model may not be exactly equal to *N_{PUCCH-2}.* Therefore, in some implementations, an appropriate length may be selected from the candidate lengths of the output sequence of the first model to adapt to the number of resources of *N_{PUCCH-2}.* That is to say, the sequence length of the output sequence of the first model may be determined based on the resource quantity of the second resource. Determining the sequence length of the output sequence of the first model based on the resource quantity of the second resource is equivalent to adjusting the output sequence of the first model according to actual resource occupation, thereby making the uplink transmission scheme more flexible.

For ease of description, the sequence length of the output sequence of the first model is referred to as a first length *L_{enc}* hereinafter. There are multiple manners of configuring (or determining) the first length *L_{enc}* based on the resource quantity of the second resource. Three configuration manners are provided below.

### Configuration Manner 1:

In Configuration Manner 1, the value of the first length *L_{enc}* is less than or equal to a first value. The first value here may be determined based on the resource quantity of the second resource. For example, the first value may be equal to the resource quantity of the second resource. The value of the first length *L_{enc}* being less than or equal to the first value helps to ensure the feedback accuracy of information (such as PMI) determined based on the first model.

For example, the value of the first length *L_{enc}* is the maximum value that is less than or equal to the first value among candidate lengths of the output sequence. For example, the resource quantity of the second resource is 20, and the first value is equal to 20. The candidate lengths of the output sequence of the first model include 12, 14, 18, 22, 24, and in this case, the value of the first length *L_{enc}* may be 18. Resource waste can be avoided when the value of the first length *L_{enc}* is set to the maximum value that is less than or equal to the first value among the candidate lengths of the output sequence.

Further, in some implementations, when there are remaining resources in the second resource, the remaining resources may be left empty or zero-padded. Alternatively, the remaining resources may also be used to transmit other control information that may be transmitted on a PUCCH. For example, assuming that the resource quantity of the second resource is *N_{PUCCH-2},* and the value of the first length *L_{enc}* is less than *N_{PUCCH-2},* the remaining *N_{PUCCH-2}- L_{enc}* resources may be left empty, zero-padded, or used to transmit other control information that may be transmitted on a PUCCH.

### Configuration Manner 2:

In Configuration Manner 2, the value of the first length *L_{enc}* is greater than or equal to a first value. The first value here may be determined based on the resource quantity of the second resource. For example, the first value may be equal to the resource quantity of the second resource. Resource waste can be avoided when the value of the first length *L_{enc}* is greater than or equal to the first value.

For example, the value of the first length *L_{enc}* is the minimum value that is greater than or equal to the first value among candidate lengths of the output sequence. For example, the resource quantity of the second resource is 20, and the first value is equal to 20. The candidate lengths of the output sequence of the first model include 12, 14, 18, 22, 24, and in this case, the value of the first length *L_{enc}* may be 22. Setting the value of the first length *L_{enc}* to the minimum value that is greater than or equal to the first value among the candidate lengths of the output sequence can try to ensure the feedback accuracy of information (such as PMI) determined based on the first model on the premise of avoiding resource waste.

Further, in some implementations, when the value of the first length *L_{enc}* is greater than the first value, a part of the output sequence of the first model that cannot be carried by the second resource may be discarded. For example, assuming that the resource quantity of the second resource is *N_{PUCCH-2},* and the value of the first length *L_{enc}* is greater than *N_{PUCCH-2},* the first *N_{PUCCH-2}* symbols in the output sequence of the first model may be truncated. Then, the truncated first *N_{PUCCH-2}* symbols may be sequentially mapped to *N_{PUCCH-2}* resources. For the discarded last *L_{enc} - N_{PUCCH-2}* symbols, the network device may perform padding based on the first *N_{PUCCH-2}* symbols during recovery, and the padding process may be implemented locally by the network device.

The above two configuration manners can adapt to different numbers of PUCCH resources. During uplink transmission, which configuration manner the terminal device specifically adopts may be determined according to the resource quantity of the second resource and the candidate lengths of the output sequence of the first model supported by the terminal device. For example, assuming that the candidate lengths *L_{enc}* of the output of the first model of the terminal device include 16 and 32, if *N_{PUCCH-2} =* 17, Configuration Manner 1 may be selected, i.e., *L_{enc} =* 16, which can reduce PUCCH resource waste; if *N_{PUCCH-2} =* 30, Configuration Manner 2 may be selected, i.e., *L_{enc} =* 32, which can ensure the feedback accuracy of information (such as PMI) determined based on the first model.

### Configuration Manner 3:

In Configuration Manner 3, the value of the first length *L_{enc}* is determined based on configuration information of a network device. For example, the configuration information of the network device is used to configure a maximum value of the sequence length of the output sequence of the first model.

Further, in some implementations, the maximum value of the sequence length of the output sequence of the first model configured by the network device may be less than a first value. The first value mentioned herein may be determined based on the resource quantity of the second resource. For example, the first value may be equal to the resource quantity of the second resource.

Configuration Manner 3 may be used in a scenario where the first channel is a PUSCH. For example, the network device may configure the maximum value of the sequence length of the output sequence of the first model according to the quantity of uplink data to be transmitted, so that some remaining resources are reserved in the second resource for UL-SCH transmission.

A manner of determining the resource quantity of the first resource and that of the second resource is described in detail below.

### 1. Manner of determining the resource quantity of the first resource

As mentioned above, the first resource may be configured to carry the first part of information in the CSI. If the UCI includes other information other than the CSI, the first resource may also be configured to carry the other information. Therefore, in some implementations, the resource quantity of the first resource may be determined based on one or more of the following: the number of resources required for the first part of information, and the number of resources required for other information in the UCI other than the CSI.

For example, the UCI includes only the CSI. Resources allocated by the PUCCH for transmitting the UCI (or CSI) are a fixed number of REs denoted by *N_{PUCCH}.* The CSI to be fed back is divided into two parts of information according to a feedback mode, where the first part of information includes bit information such as a CQI, an RI, an LI. The first part of information undergoes code block segmentation, CRC attachment, channel coding, rate matching, symbol modulation and other processes to form a constellation point sequence with a length of *N_{PUCCH-1}.* Then, the constellation point sequence may be sequentially mapped to *N_{PUCCH-1}* resources in *N_{PUCCH}. N_{PUCCH-1}* here is the resource quantity of the first resource. In this example, the resource quantity of the first resource is determined based on the number of resources required for bit information such as a CQI, an RI, an LI in the CSI.

For another example, the UCI includes other information such as a HARQ-ACK and/or an SR. That is to say, other information such as a HARQ-ACK and/or an SR needs to be multiplexed and transmitted with the CSI. Resources allocated by the PUCCH for the UCI are a fixed number of REs, denoted by *N_{PUCCH}.* In this case, bit information such as a CQI, an RI, an LI in the CSI (corresponding to the first part of information mentioned above) needs to undergo code block segmentation, CRC attachment, channel coding, rate matching, symbol modulation and other processes together with the HARQ-ACK/SR to form a constellation point sequence with a length of *N_{PUCCH-1}.* Then, the constellation point sequence may be sequentially mapped to *N_{PUCCH-1}* resources. *N_{PUCCH-1}* mentioned herein is the resource quantity of the first resource. In this example, the resource quantity of the first resource is determined based on the number of resources required for bit information such as a CQI, an RI, an LI in the CSI and the number of resources required for the HARQ-ACK/SR.

### 2. Manner of determining the resource quantity of the second resource

The manner of determining the resource quantity of the second resource may vary with the type of the first channel. The manner of determining the resource quantity of the second resource is described in detail below by taking the first channel as a PUCCH and a PUSCH respectively as examples.

2.1 The first channel is a PUCCH

When the first channel is a PUCCH, the resource quantity of the second resource may be determined based on one or more of the following: the resource quantity of the first resource, and the number of resources in the first channel for transmitting UCI.

For the resource quantity of the first resource, reference may be made to the description in the section "Manner of determining the resource quantity of the first resource", which is not repeated here.

The number of resources in the first channel for transmitting UCI may be denoted by *N_{PUCCH}. N_{PUCCH}* may be a fixed number of REs, and *N_{PUCCH}* may be determined based on predefined information and/or configuration information of the network device.

Illustratively, the resource quantity of the second resource may be determined based on the following formula (or satisfy the following formula):
${N}_{PUCCH - 2} = {N}_{PUCCH} - {N}_{PUCCH} - 1$
where *N_{PUCCH-2}* represents the resource quantity of the second resource, *N_{PUCCH}* represents the number of resources in the first channel for transmitting UCI, and *N_{PUCCH-1}* represents the resource quantity of the first resource.

2.2 The first channel is a PUSCH

When the first channel is a PUSCH, the resource quantity of the second resource may be determined based on one or more of the following:
the number of resources, in the first channel, for carrying a reference signal;
the resource quantity of the first resource;
the number of resources in the first channel reserved for UL-SCH; and
the number of resources of the first channel.

The first channel may carry reference signals. The reference signals may include DMRS and/or PTRS, for example. Therefore, in some implementations, the number of resources occupied by the reference signals may be considered when determining the resource quantity of the second resource.

For the resource quantity of the first resource, reference may be made to the description in the section "Manner of determining the resource quantity of the first resource", which is not repeated here.

The first channel may reserve resources for UL-SCH transmission or may not reserve resources for UL-SCH transmission. In the embodiments of the present disclosure, a case where "reserving resources for UL-SCH transmission is allowed" is referred to as Multiplexing manner 1 of CSI and a UL-SCH; a case where "reserving resources for UL-SCH transmission is not allowed" is referred to as Multiplexing manner 2 of CSI and UL-SCH. If the CSI and the UL-SCH are transmitted in Multiplexing manner 1, the number of resources reserved for UL-SCH may be considered when determining the resource quantity of the second resource. Certainly, if the CSI and the UL-SCH are transmitted in Multiplexing manner 2, this factor does not need to be considered.

As an example, if the CSI and the UL-SCH are transmitted in Multiplexing manner 1, the resource quantity of the second resource may be determined based on the following formula (or satisfy the following formula):
${N}_{PUSCH - 2} = {N}_{PUSCH} - {N}_{UL - SCH} - {N}_{PUSCH - 1}$
where *N_{PUSCH-2}* represents the resource quantity of the second resource, *N_{PUSCH}* represents the number of remaining resources in the first channel other than the resources for carrying a reference signal, *N_{UL-SCH}* represents the number of resources in the first channel reserved for UL-SCH, and *N_{PUSCH-1}* represents the resource quantity of the first resource.

As another example, if the CSI and the UL-SCH are transmitted in Multiplexing manner 2, the resource quantity of the second resource may be determined based on the following formula (or satisfy the following formula):
${N}_{PUSCH - 2} = {N}_{PUSCH} - {N}_{PUSCH - 1}$
where *N_{PUSCH-2}* represents the resource quantity of the second resource, *N_{PUSCH}* represents the number of remaining resources in the first channel other than resources for carrying a reference signal, and *N_{PUSCH-1}* represents the resource quantity of the first resource.

In some implementations, regardless of whether resources are reserved for UL-SCH transmission, if the second resource includes remaining resources other than resources occupied by the second part of information, the remaining resources may be configured to carry a UL-SCH, thereby avoiding resource waste.

For ease of understanding, two more specific examples are provided below.

### Example 1: CSI and UL-SCH are transmitted in PUSCH in Multiplexing manner 1

In Example 1, the number of resources of PUSCH after removing reference signals such as DMRS and PTRS is *N_{PUSCH},* and the number of resources reserved for a UL-SCH is *N_{UL-SCH},* and these reserved resources cannot be used for CSI transmission. Therefore, the maximum number of resources in PUSCH available for CSI transmission is *N_{PUSCH} - N_{UL-SCH}.* Further, the CSI is divided into a first part of information and a second part of information, where the first part of information carries contents such as a CQI, an RI, an LI, and occupies *N_{PUSCH-1}* resources after code block segmentation, CRC attachment, channel coding, rate matching and symbol modulation using a mapping procedure specified in NR. Therefore, resources available for transmitting the second part of information are *N_{PUSCH-2} = N_{PUSCH} - N_{UL-SCH} - N_{PUSCH-1}.* Based on the number of resources, Configuration Manner 1 or Configuration Manner 2 described above may be adopted to determine the sequence length of the output sequence of the first model, so as to feed back a PMI in the second part of information. It should be noted that when Configuration Manner 1 mentioned above is selected for reporting the second part of information, the excess *N_{PUSCH-2} - L_{enc}* resources may be used for UL-SCH transmission to ensure no resource waste on a PUSCH.

### Example 2: CSI and UL-SCH are transmitted in PUSCH in Multiplexing manner 2

In Example 2, the number of resources of a PUSCH after removing reference signals such as DMRS and PTRS is *N_{PUSCH},* but no resources are reserved for a UL-SCH in a PUSCH. That is to say, all potential resources in a PUSCH can be used for CSI transmission. After the CSI is divided into a first part of information and a second part of information, the number of resources occupied by the first part of information is *N_{PUSCH-1},* so the number of resources available for transmitting the second part of information is *N_{PUSCH-2} = N_{PUSCH}- N_{PUSCH-1}.* In this case, according to *N_{PUSCH-2},* Configuration Manner 1 or Configuration Manner 2 described above may be adopted to determine the sequence length of the output sequence of the first model, so as to feed back PMI in the second part of information. It should be noted that when Configuration Manner 1 is selected for transmitting the second part of information, the excess *N_{PUSCH-2}* - *L_{enc}* resources may be used for UL-SCH transmission to ensure no resource waste on a PUSCH. When Configuration Manner 2 is selected for transmitting the second part of information, there are no excess PUSCH resources, and multiplexing transmission of the UL-SCH and the CSI is not supported in this case. Alternatively, in this multiplexing manner, to prevent the CSI from occupying too many uplink resources, Configuration Manner 3 mentioned above may be adopted to limit the maximum sequence length *L_{enc-max}* output by the first model, such that *L_{enc-max} < N_{PUSCH-2}-* In this case, the remaining *N_{PUSCH-2} - L_{enc}* resources in *N_{PUSCH-2}* may still be used for UL-SCH transmission.

If the first channel is a PUSCH, in addition to determining the resource quantity of the first resource (for carrying the first part of information in the CSI and/or other information in UCI other than the CSI) and/or the second resource (for carrying the second part of information in the CSI), an arrangement manner of the first resource and the second resource on PUSCH resources may also be determined. Taking the first resource including *N_{PUSCH-1}* resources and the second resource including *N_{PUSCH-2}* resources as an example, there may be multiple arrangement manners of the *N_{PUSCH-1}* resources and the *N_{PUSCH-2}* resources on PUSCH resources. For example, a frequency-domain continuous resource allocation manner may be adopted to determine the arrangement manner of the *N_{PUSCH-1}* resources and the *N_{PUSCH-2}* resources on PUSCH resources. For another example, a frequency-hopping resource allocation manner may be adopted to determine the arrangement manner of the *N_{PUSCH-1}* resources and the *N_{PUSCH-2}* resources on PUSCH resources.

As an example, *N_{PUSCH-1}* resources may be allocated consecutively in ascending order of subcarrier index and then consecutively in forward order of symbol, and the *N_{PUSCH-1}* resources may be configured to carry the first part of information in the CSI and/or other information in the UCI other than the CSI. *N_{PUSCH-2}* resources among remaining resources of the PUSCH may be configured to carry the second part of information in the CSI. After the above resource allocation procedure, if there are still remaining resources, the remaining resources may be used for UL-SCH transmission.

As another example, *N_{PUSCH-1}* resources may be allocated consecutively in ascending order of subcarrier index and then consecutively in forward order of symbol. However, when resources are allocated in ascending order of subcarrier index, only odd subcarriers may be allocated without allocating even subcarriers, or only even subcarriers may be allocated without allocating odd subcarriers. *N_{PUSCH-2}* resources among remaining resources of the PUSCH may be configured to carry the second part of information in the CSI. After the above resource allocation procedure, if there are still remaining resources, the remaining resources may be used for UL-SCH transmission.

Embodiment 1 is described in more detail below with reference to specific examples. In the following examples, the first part of information in the CSI includes bit information such as an RI, an LI and a CQI; the second part of information in the CSI includes a PMI. The first model is an encoder based on joint source-channel coding. It should be noted that the following examples are only intended to help those skilled in the art understand the embodiments of the present disclosure, rather than limiting the embodiments of the present disclosure to the illustrated specific values or specific scenarios. Those skilled in the art can obviously make various equivalent modifications or changes based on the given examples, and such modifications or changes also fall within the scope of the embodiments of the present disclosure.

In this example, three cases may be classified according to the content of the UCI, namely Case 1, Case 2 and Case 3 described below.

In Case 1, the UCI does not include the CSI and only includes a HARQ-ACK and/or an SR. In this case, the uplink transmission procedure of the UCI is consistent with a conventional NR feedback and reporting mode.

In Case 2, the UCI includes only the CSI and does not include a HARQ-ACK and an SR. In this case, the PMI in the CSI may be reported based on an output of the first model, and other information included in the CSI, such as a CQI, an RI, an LI, may be reported using a conventional NR feedback and reporting mode.

In Case 3, the UCI includes the CSI. In addition to the CSI, the UCI also includes other information, such as one or more of a HARQ-ACK, an SR and other control information that may be transmitted via the UCI. In this case, the PMI in the CSI may be reported based on an output of the first model. Other information in the CSI, such as a CQI, an RI, an LI, may be combined with other information in the UCI and reported using a conventional NR feedback and reporting mode.

### Example a: Only CSI transmission on PUCCH

When the UCI includes only the CSI, resources allocated by a PUCCH for CSI transmission are a fixed number of REs, denoted by *N_{PUCCH}.* The CSI to be fed back is divided into two parts according to a feedback mode to obtain a first part of information and a second part of information. The first part of information needs to carry bit information such as a CQI, an RI, an LI. The first part of information undergoes a mapping procedure of the UCI on the PUCCH specified by the NR system to form a constellation point sequence with a length of *N_{PUCCH-1},* and is sequentially mapped to *N_{PUCCH-1}* resources. The mapping procedure of the first part of information may include code block segmentation, CRC attachment, channel coding, rate matching, symbol modulation and other processes.

The second part of information includes a PMI. The number of resources for carrying the second part of information is *N_{PUCCH-1} = N_{PUCCH} - N_{PUCCH-1}.* The input of the first model may be original CSI obtained by measurement of the terminal device. The original CSI may be single-layer or multi-layer information. Considering that the sequence length of the output sequence of the first model only supports a limited number of configurations, the sequence length may not be exactly equal to *N_{PUCCH-2},* so the sequence length of the output sequence of the first model needs to be selected to adapt to the number of resources of *N_{PUCCH-2}.* The selection of the first model includes, for example, the following two configuration manners.

Configuration Manner 1 (zero-padding): The sequence length *L_{enc}* of the output sequence of the first model is selected as the maximum length not greater than *N_{PUCCH-2}* among candidate lengths configured for the first model. The remaining *N_{PUCCH-2} - L_{enc}* resources may be left empty or used to transmit other control information that may be transmitted on the PUCCH.

Configuration Manner 2 (truncation): The sequence length *L_{enc}* of the output sequence of the first model is selected as the minimum length greater than *N_{PUCCH-2}* among candidate lengths configured for the first model, the first *N_{PUCCH-2}* symbols are truncated and sequentially mapped to *N_{PUCCH-2}* resources. For the discarded last *L_{enc} - N_{PUCCH-2}* symbols, the network device may perform padding during recovery, and the padding process may be implemented locally by the network device.

The above two configuration manners can adapt to different numbers of PUCCH resources. Which configuration manner is specifically adopted may be determined according to the specific number of resources of *N_{PUCCH-2}* and the candidate lengths supported by the terminal device (i.e., candidate lengths of the output sequence of the first model). For example, the terminal device supports two candidate lengths: 16 and 32. If *N_{PUCCH-2} =* 17, Configuration Manner 1 is selected, i.e., *L_{enc} =* 16, which can reduce PUCCH resource waste; and if *N_{PUCCH-2}=* 30, Configuration Manner 2 may be selected, i.e., *_{Lenc} =* 32, which can ensure PMI feedback accuracy.

### Example b: Multiplexing transmission of HARQ-ACK/SR and CSI on PUCCH

When the UCI includes other information such as a HARQ-ACK and/or an SR, such information needs to be subjected to multiplexing transmission with the CSI. Resources allocated by the PUCCH for UCI transmission are a fixed number of REs, denoted by *N_{PUCCH}.* In this case, the first part of information in the CSI (i.e., bit information such as a CQI, an RI, an LI) needs to undergo a mapping procedure of the UCI on the PUCCH specified by the NR system together with HARQ-ACK/SR to form a constellation point sequence with a length of *N_{PUCCH-1},* and is sequentially mapped to *N_{PUCCH-1}* resources. The mapping procedure of the first part of information includes code block segmentation, CRC attachment, channel coding, rate matching, symbol modulation and other processes.

The second part of information includes a PMI. The carrying manner of the PMI and the selection manner of the sequence length of the output sequence of the first model are similar to those in Example a, and are not repeated here.

In Example b, the arrangement manner of *N_{PUCCH-1}* resources and *N_{PUCCH-2}* resources on *N_{PUCCH}* PUCCH resources carrying a CSI feedback is similar to that in Example a, and is not repeated here.

### Example c: Only CSI transmission on PUSCH

Semi-persistent and aperiodic CSI may also be fed back via a PUSCH. In the NR system, semi-persistent CSI cannot be multiplexed with uplink data, while aperiodic CSI can be multiplexed with uplink data (UL-SCH). Therefore, discussion is separately performed below for semi-persistent CSI and aperiodic CSI.

For semi-persistent CSI, resources allocated by PUSCH for reporting CSI are *N_{PUSCH}.* During reporting, the CSI to be reported may be divided into two parts of information. The division manner of the two parts of information, the reporting procedure of the two parts of information, and the selection manner of the output sequence of the first model are similar to those in Example a, and are not repeated here.

For aperiodic CSI, a manner of multiplexing with a UL-SCH needs to be considered. This example supports two manners of multiplexing CSI and UL-SCH, namely Multiplexing manner 1 and Multiplexing manner 2 described below.

Multiplexing manner 1 (UL-SCH resource reservation allowed): In this multiplexing manner, the number of resources of PUSCH after removing reference signals such as DMRS and PTRS is *N_{PUSCH},* and the number of resources reserved for UL-SCH is *N_{UL-SCH}.* Since the reserved resources cannot be used for CSI reporting, the maximum number of resources in PUSCH available for CSI reporting is *N_{PUSCH} - N_{UL-SCH}.* Further, CSI may be divided into a first part of information and a second part of information. The first part of information carries bit information such as a CQI, an RI, an LI. The first part of information occupies *N_{PUSCH-1}* resources after code block segmentation, CRC attachment, channel coding, rate matching and symbol modulation using a mapping procedure specified in NR. Therefore, resources available for transmitting the second part of information are *N_{PUSCH-2} = N_{PUSCH} - N_{UL-SCH} - N_{PUSCH-1}.* Based on the number of resources, Configuration Manner 1 or Configuration Manner 2 as shown in Example a may be adopted to select the sequence length of the output sequence of the first model, so as to report the PMI in the second part of information. It should be noted that when Configuration Manner 1 is selected for reporting the second part of information, the excess *N_{PUSCH-2} - L_{enc}* resources may be used for UL-SCH transmission to ensure no resource waste on a PUSCH.

Multiplexing manner 2 (UL-SCH resource reservation not allowed): In this multiplexing manner, the number of resources of PUSCH after removing reference signals such as DMRS and PTRS is *N_{PUSCH}.* No resources are reserved for UL-SCH in Multiplexing manner 2, i.e., all potential N_PUSCH resources can be used for CSI reporting. After the CSI is divided into a first part of information and a second part of information, the number of resources occupied by the first part of information is *N_{PUSCH-1},* so resources available for transmitting the second part of information are *N_{PUSCH-2} = N_{PUSCH} - N_{PUSCH-1}.* In this case, according to the number of resources, Configuration Manner 1 or Configuration Manner 2 as described in Example a may be adopted to select the sequence length of the output sequence of the first model, so as to report the PMI in the second part of information. It should be noted that when Configuration Manner 1 is selected for reporting the second part of information, the excess *N_{PUSCH-2} - L_{enc}* resources may be used for UL-SCH transmission to ensure no resource waste on a PUSCH. When Configuration Manner 2 is selected for reporting the second part of information, there are no excess PUSCH resources, and multiplexing transmission of UL-SCH and CSI is not supported in this case. In this multiplexing manner, to prevent excessive resources occupied by CSI reporting, the network device may also configure a maximum sequence length *L_{enc-max}* output by the first model via downlink signaling, where *L_{enc-max} < N_{PUSCH-2}.* In this case, *L_{enc}* in Configuration Manner 2 may be the maximum length not exceeding *L_{enc-max}.* In this case, the remaining *N_{PUSCH-2} - L_{enc}* resources may still be used for UL-SCH transmission.

There may be multiple arrangement manners of the above-mentioned *N_{PUSCH-1}* resources and *N_{PUSCH-2}* resources on PUSCH resources. For example, a frequency-domain continuous resource allocation manner may be adopted to determine the arrangement manner of the *N_{PUSCH-1}* resources and the *N_{PUSCH-2}* resources on PUSCH resources. For another example, a frequency-hopping resource allocation manner may be adopted to determine the arrangement manner of the *N_{PUSCH-1}* resources and the *N_{PUSCH-2}* resources on PUSCH resources.

As an example, *N_{PUSCH-1}* resources may be allocated consecutively in ascending order of subcarrier index and then consecutively in forward order of symbol, and the *N_{PUSCH-1}* resources may be configured to carry the first part of information in the CSI and/or other information in the UCI other than the CSI. *N_{PUSCH-2}* resources among remaining resources of PUSCH may be configured to carry the second part of information in the CSI. After the above resource allocation procedure, if there are still remaining resources, the remaining resources may be used for UL-SCH transmission.

As another example, *N_{PUSCH-1}* resources may be allocated consecutively in ascending order of subcarrier index and then consecutively in forward order of symbol. However, when resources are allocated in ascending order of subcarrier index, only odd subcarriers may be allocated without allocating even subcarriers, or only even subcarriers may be allocated without allocating odd subcarriers. *N_{PUSCH-2}* resources among remaining resources of PUSCH may be configured to carry the second part of information in the CSI. After the above resource allocation procedure, if there are still remaining resources, the remaining resources may be used for UL-SCH transmission.

### Example d: HARQ-ACK/SR and CSI transmission on PUSCH

The number of resources of PUSCH after removing reference signals such as DMRS and PTRS is *N_{PUSCH},* and these resources are allocated to UCI for reporting HARQ-ACK/SR and CSI. For semi-persistent CSI, since there is no multiplexing of CSI and UL-SCH, the resource mapping procedure of PUSCH is similar to the mapping procedure on a PUCCH in Example b, and is not repeated here.

For aperiodic CSI, similar to Example b, the HARQ-ACK/SR and the first part of information in the CSI may be jointly processed, and the processed information occupies *N_{PUSCH-1}* resources in total. Meanwhile, multiplexing of the UL-SCH and the second part of information in the CSI may be implemented according to Multiplexing manner 1 or Multiplexing manner 2 in Example c.

The arrangement manner of *N_{PUSCH-1}* resources and *N_{PUSCH-2}* resources in PUSCH resources may be determined based on the manner described in Example c, and is not repeated here.

### Embodiment 2: Interaction of Configuration Information and/or Capability Reporting of Terminal Device

Embodiment 2 describes a procedure of interaction of configuration information between a terminal device and a network device and/or capability reporting of the terminal device, so as to support the uplink transmission procedure described in Embodiment 1.

Referring to FIG. 9, in step S910, a terminal device receives first configuration information from a network device. The first configuration information may be used to indicate one or more of the following: a transmission manner of UCI, a multiplexing manner of CSI and a UL-SCH on a PUSCH, and configuration information of the first model. The content of the first configuration information is described in detail below by way of example.

In some implementations, the first configuration information may indicate the transmission manner of UCI (or a reporting mode of UCI). The transmission manner of UCI may include a first transmission manner and a second transmission manner. The first transmission manner may be a transmission manner based on the first model. For example, if the first transmission manner is selected, the second part of information in the CSI may be determined using the first model according to the description of Embodiment 1, so as to transmit the second part of information. The second transmission manner may be a non-model-based transmission manner. For example, if the second transmission manner is selected, UCI information may be reported according to the NR protocol, i.e., the information in the UCI is processed and reported through code block segmentation, CRC attachment, channel coding, rate matching, symbol modulation, resource mapping and other processes. Alternatively, the second transmission manner may be a transmission manner based on another model. The other model mentioned herein refers to a model with a function different from that of the first model. For example, the first model may be an AI-based joint source-channel coding model, and the other model may be an AI-based CSI feedback model introduced in Release 18.

For example, the first configuration information includes information a, and the information a is used to indicate the transmission manner of UCI. When the value of the information a is a first value (e.g., the information a occupies one bit and the value of the bit is 0), the UCI is transmitted according to the NR protocol; when the value of the information a is a second value (e.g., information a occupies one bit and the value of the bit is 1), the UCI is transmitted in the manner described in Embodiment 1. The information a may further respectively indicate the transmission manner of the UCI on a PUCCH and/or PUSCH. For example, the information a includes a first bit field, and the first bit field (which may include one or more bits) is used to indicate the transmission manner of the UCI on a PUCCH. When the value of the first bit field is a first value (e.g., the first bit field is one bit and the value of the bit is 0), the UCI is transmitted via the PUCCH according to the NR protocol; and when the value of the first bit field is a second value (e.g., the first bit field is one bit and the value of the bit is 1), the UCI is transmitted via the PUCCH in the manner described in Embodiment 1. For another example, the information a includes a second bit field, and the second bit field (which may include one or more bits) is used to indicate the transmission manner of the UCI on a PUSCH. When the value of the second bit field is a first value (e.g., the second bit field is one bit and the value of the bit is 0), the UCI is transmitted via the PUSCH according to the NR protocol; and when the value of the second bit field is a second value (e.g., the second bit field is one bit and the value of the bit is 1), the UCI is transmitted via the PUSCH in the manner described in Embodiment 1.

In some implementations, the first configuration information may indicate a multiplexing manner of CSI and a UL-SCH on a PUSCH. For the multiplexing manner of CSI and UL-SCH, reference may be made to Multiplexing manner 1 and/or Multiplexing manner 2 described in Embodiment 1. For example, the first configuration information includes information b, and the information b is used to indicate the multiplexing manner of CSI and a UL-SCH on a PUSCH. If the value of the information b is a first value, the multiplexing manner of CSI and a UL-SCH on a PUSCH is Multiplexing manner 1 described in Embodiment 1, i.e., resources are reserved for UL-SCH transmission; if the value of the information b is a second value, the multiplexing manner of CSI and a UL-SCH on a PUSCH is Multiplexing manner 2 described in Embodiment 1, i.e., no resources are reserved for UL-SCH transmission.

In some implementations, the first configuration information may indicate configuration information of the first model.

For example, the configuration information of the first model is used to indicate a manner (or configuration manner) of determining the sequence length of the output sequence of the first model. The configuration manner of the sequence length of the output sequence of the first model may adopt Configuration Manner 1 and Configuration Manner 2 in Embodiment 1. For detailed description of Configuration Manner 1 and Configuration Manner 2, reference may be made to Embodiment 1, which is not repeated here.

For another example, the configuration information of the first model is used to indicate candidate lengths *L_{enc}* of the output sequence of the first model, i.e., sequence lengths of the output sequence supportable by the first model. Illustratively, assuming that the first model of the terminal device is trained and downloaded from the network device or an entity for model training located at the network device side, the network device may indicate the output length *L_{enc}* supportable by the first model via the first configuration information. For example, the first configuration information indicates that the output length *L_{enc}* supportable by the first model = {16, 32, 64, 128, 256, ...}. The output length of the first model actually used by the terminal device needs to be selected from values configured by the network device. There are multiple manners of selecting the output length of the first model. For example, the output length of the first model may be selected according to the number of PUCCH or PUSCH resources configured by the network device and according to Configuration Manner 1 or Configuration Manner 2 described in Embodiment 1.

For another example, the configuration information of the first model is used to indicate a maximum length *L_{enc-max}* of the output sequence of the first model and/or an adjustment step l of the sequence length of the output sequence of the first model. Illustratively, assuming that the first model of the terminal device is trained and downloaded from the network device or an entity for model training located at the network device side, the network device may indicate the maximum output length *L_{enc-max}* and the adjustment step l of the first model via the first configuration information. The sequence lengths of the output sequence supportable by the first model are: *L_{enc-max}* - k·l, where k = 0, 1, 2, ... and other non-negative integer values. There are multiple manners of selecting the output length of the first model. For example, the output length of the first model may be selected according to the number of PUCCH or PUSCH resources configured by the network device and according to Configuration Manner 1 or Configuration Manner 2 described in Embodiment 1.

For another example, the configuration information of the first model may indicate an input format of the first model. The first configuration information may indicate that the input format of the first model is one of the following: full channel information, subband-level PMI information, and wideband-level PMI information.

For another example, the configuration information of the first model may indicate generalization capability of the first model. Illustratively, the configuration information of the first model may indicate an adaptation scenario of the first model. For instance, the configuration information of the first model indicates that the first model is a cell-specific model, a terminal device-specific model, a terminal device group-specific model, or a model corresponding to multiple cells. Alternatively, the configuration information of the first model indicates that the first model is an outdoor terminal device-specific model or an indoor terminal device-specific model. Alternatively, the configuration information of the first model indicates that the first model is a model adapted to a low-speed scenario or a model adapted to a high-speed scenario.

The embodiments of the present disclosure impose no specific limitation on the transmission manner of the first configuration information. For example, the first configuration information may be carried by one of downlink signaling such as broadcast messages (e.g., master information block (MIB), system information block 1 (SIB), radio resource control (RRC) messages, medium access control control element (MAC CE), downlink control information (DCI)), or carried by other dedicated signaling related to AI/ML. Alternatively, the first configuration information may also be carried by a combination of the foregoing signaling. For example, the reporting mode of UCI may be configured by MAC CE, and the multiplexing manner of CSI and a UL-SCH on a PUSCH may be dynamically indicated by DCI.

Referring again to FIG. 9, in some implementations, after receiving the first configuration information, the terminal device may perform step S920, namely configuring an uplink transmission manner according to the first configuration information. For example, after receiving the first configuration information, the terminal device may perform uplink transmission in the manner described in Embodiment 1. For detailed content, reference may be made to Embodiment 1, and details are not repeated herein.

The foregoing describes that a network device sends configuration information to a terminal device. In some implementations, a terminal device may also send configuration information to a network device (such configuration information may be referred to as second configuration information). For example, when the first model is trained by a terminal device or by an entity for model training located at the terminal device side, the terminal device may send the second configuration information to a network device to indicate the configuration of the first model.

The second configuration information may be used to indicate one or more of the following: candidate lengths of the output sequence of the first model, a maximum length of the output sequence of the first model, an adjustment step of the sequence length of the output sequence of the first model, an input format of the first model, and generalization capability of the first model. For detailed introduction of the foregoing information, reference may be made to the related description in the first configuration information, and details are not described herein.

In some implementations, the terminal device may send first capability information to the network device to support the terminal device in implementing the uplink transmission manner based on the first model. The first capability information may be used to indicate that the terminal device supports one or more of the following: the first model, the first configuration information, and the second configuration information.

For example, the first capability information indicates that the terminal device supports the first model or has the capability of supporting the first model. Further, as an implementation, the terminal device supporting the first model may also support receiving the first configuration information from the network device and/or sending the second configuration information to the network device.

For another example, the first capability information indicates that the terminal device supports the first configuration information (or has the capability of receiving the first configuration information). Further, as an implementation, the terminal device supporting the first configuration information also has the capability of supporting the first model and/or sending the second configuration information to the network device.

For another example, the first capability information indicates that the terminal device supports the second configuration information (or has the capability of sending the second configuration information). Further, as an implementation, the terminal device supporting the second configuration information also has the capability of supporting the first model and/or receiving the first configuration information sent by the network device.

Embodiment 3: Switching from the First Model to a First Processing Scheme

It should be understood that Embodiment 3 may be implemented independently, or may be implemented in combination with Embodiment 1 and/or Embodiment 2. For example, a terminal device may exchange the configuration information mentioned in Embodiment 2 with a network device. Then, based on the configuration information, the terminal device may perform uplink transmission based on the first model in the manner described in Embodiment 1. In addition, when a certain condition is satisfied, the first model may be switched to the first processing scheme.

The first processing scheme mentioned above may refer to a second model different from the first model. The second model may be a default model or an updated model. The second model may also be referred to as a second AI/ML model or a second function. Alternatively, the first processing scheme may also refer to a non-model-based processing scheme. Illustratively, the first processing scheme may be a processing scheme specified in the NR protocol, that is, processing and transmission of UCI are performed based on processes such as code block segmentation, CRC attachment, channel coding, rate matching, symbol modulation, and resource mapping. If the first processing scheme is the processing scheme specified in the NR protocol, the switching from the first model to the first processing scheme may also be understood as a fallback mechanism, that is, fallback from a model-based scheme to a conventional scheme.

The switching from the first model to the first processing scheme may be triggered based on a first condition. The first condition may be associated with one or more of the following: link-level information (such as transmission rate and/or bit error rate), PMI, change of environment information, change of communication scenario, and the like.

For example, when the rate and/or bit error rate is less than or equal to a first threshold, the switching from the first model to the first processing scheme is triggered.

For another example, when the rate and/or bit error rate is greater than or equal to the first threshold, the switching from the first model to the first processing scheme is triggered.

For another example, when the cosine similarity of PMI is less than or equal to a second threshold, the switching from the first model to the first processing scheme is triggered.

For another example, when the cosine similarity of PMI is greater than or equal to the second threshold, the switching from the first model to the first processing scheme is triggered.

For another example, when the improvement of the signal-to-noise ratio of the signal satisfies a certain condition, the switching from the first model to the first processing scheme is triggered.

For another example, when the degradation of the signal-to-noise ratio of the signal satisfies a certain condition, the switching from the first model to the first processing scheme is triggered.

For another example, when the terminal device moves from indoor to outdoor, the switching from the first model to the first processing scheme is triggered.

For another example, when the terminal device moves from outdoor to indoor, the switching from the first model to the first processing scheme is triggered.

For another example, when the moving speed of the terminal device changes from low speed to high speed, the switching from the first model to the first processing scheme is triggered.

For another example, when the moving speed of the terminal device changes from high speed to low speed, the switching from the first model to the first processing scheme is triggered.

Whether the first condition is satisfied may be monitored by the terminal device or by the network device. The monitoring process may be periodic or aperiodic. Alternatively, the monitoring manner may be configured by the network device, for example, the network device may semi-statically configure the monitoring manner.

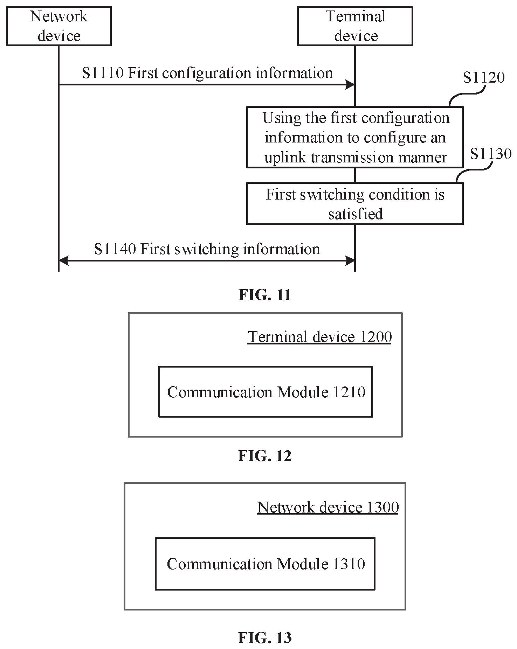

For ease of understanding, two more specific examples are given below with reference to FIGS. 10 and 11.

FIG. 10 is a flowchart of a network device monitoring whether a first condition is satisfied.

Referring to FIG. 10, in step S1010, a terminal device receives first configuration information from the network device. For detailed description of the first configuration information, reference may be made to Embodiment 2.

In step S1020, the terminal device configures an uplink transmission manner using the first configuration information.

In step S1030, the network device detects the first model to determine whether a first condition is satisfied.

In step S1040, when the first condition is satisfied, the network device sends first switching information to the terminal device. The first switching information is used to indicate switching from the first model to a first processing scheme.

FIG. 11 is a flowchart of a terminal device monitoring whether a first condition is satisfied.

Referring to FIG. 11, in step S1110, the terminal device receives first configuration information from a network device. For a detailed description of the first configuration information, reference may be made to Embodiment 2.

In step S1120, the terminal device configures an uplink transmission manner using the first configuration information.

In step S1130, the terminal device detects the first model to determine whether the first condition is satisfied.

In step S1140, when the first condition is satisfied, the terminal device sends first switching information to the network device. The first switching information is used to indicate switching from the first model to the first processing scheme.

In some implementations, switching from the first model to the first processing scheme may be triggered based on a first timer. For example, the terminal device may activate the first model after receiving the first configuration information. When starting uplink transmission based on the first model, the terminal device may start the first timer. When the first timer counts down to zero, switching to the first processing scheme is performed automatically. Further, in some implementations, the first timer may run synchronously on a network device side, so that the network device can switch to the first processing scheme synchronously without reporting and indication from the terminal device.

It should be noted that the resource quantity mentioned in any one of the foregoing embodiments (such as the resource quantity of the first resource and the resource quantity of the second resource) may be a resource quantity in a unit of RE, or may be a resource quantity in a unit of another frequency domain unit.

It should also be noted that the output sequence of the first model mentioned in any one of the foregoing embodiments may refer to a symbol sequence output by the first model. The sequence length of the output sequence of the first model may be understood as a sequence length of the symbol sequence, that is, a quantity included in the symbol sequence.

It should also be noted that a process of determining the sequence length of the output sequence of the first model mentioned in Embodiment 1 may also be understood as a process of determining the first model, that is, output sequences of different lengths may correspond to different models.

The method embodiments of the present disclosure are described in detail above with reference to FIG. 1 to FIG. 11. Apparatus embodiments of the present disclosure are described in detail below with reference to FIG. 12 to FIG. 14. It should be understood that the description of the method embodiments corresponds to the description of the apparatus embodiments, and therefore, for parts not described in detail, reference may be made to the foregoing method embodiments.

FIG. 12 is a schematic structural diagram of a terminal device according to an embodiment of the present disclosure. A terminal device 1200 shown in FIG. 12 may perform steps performed by the terminal device in any one of the foregoing embodiments. The terminal device 1200 may include a communication module 1210. The communication module 1210 is configured to send a first channel. The first channel is configured to carry UCI, the UCI includes CSI, the first channel includes a first resource and a second resource, the first resource is configured to carry a first part of information in the CSI, the second resource is configured to carry a second part of information in the CSI, and the second part of information is determined based on an output sequence of a first model.

In some implementations, the sequence length of the output sequence is a first length, and the first length is determined based on the resource quantity of the second resource.

In some implementations, a value of the first length is less than or equal to a first value, and the first value is determined based on the resource quantity of the second resource.

In some implementations, the value of the first length is a maximum value that is less than or equal to the first value among values of candidate lengths of the output sequence.

In some implementations, the value of the first length is greater than or equal to the first value, and the first value is determined based on the resource quantity of the second resource.

In some implementations, the value of the first length is a minimum value that is greater than or equal to the first value among values of candidate lengths of the output sequence.

In some implementations, the value of the first length is determined based on configuration information of a network device.

In some implementations, configuration information of the network device is used to configure a maximum value of the sequence length of the output sequence, and the maximum value of the sequence length of the output sequence is less than the first value, the first value being determined based on the resource quantity of the second resource.

In some implementations, the first resource is further configured to carry first information other than the CSI.

In some implementations, the first information includes one or more of the following:
a HARQ-ACK; and
an SR.

In some implementations, the first channel is a PUCCH, and the resource quantity of the second resource may be determined based on one or more of the following:
the resource quantity of the first resource; and
the number of resources in the first channel for transmitting the UCI.

In some implementations, the resource quantity of the second resource satisfies the following formula:
${N}_{PUCCH - 2} = {N}_{PUCCH} - {N}_{PUCCH - 1} ;$
where *N_{PUCCH-2}* represents the resource quantity of the second resource, *N_{PUCCH}* represents the number of resources in the first channel for transmitting the UCI, and *N_{PUCCH-1}* represents the resource quantity of the first resource.

In some implementations, the first channel is a PUSCH, and the resource quantity of the second resource may be determined based on one or more of the following:
the number of resources in the first channel for carrying a reference signal;
the resource quantity of the first resource;
the number of resources reserved for UL-SCH in the first channel; and
the resource quantity of the first channel.

In some implementations, the resource quantity of the second resource satisfies the following formula:
${N}_{PUCCH - 2} = {N}_{PUCCH} - {N}_{UL - SCH} - {N}_{PUCCH - 1} ;$
where *N_{PUCCH-2}* represents the resource quantity of the second resource, *N_{PUCCH}* represents the number of remaining resources in the first channel other than resources used for carrying a reference signal, *N_{UL-SCH}* represents the number of resources reserved for UL-SCH in the first channel, and *N_{PUCCH-1}* represents the resource quantity of the first resource.

In some implementations, the resource quantity of the second resource satisfies the following formula:
${N}_{PUCCH - 2} = {N}_{PUCCH} - {N}_{PUCCH - 1} ;$
where *N_{PUCCH-2}* represents the resource quantity of the second resource, *N_{PUCCH}* represents the number of remaining resources in the first channel other than resources used for carrying a reference signal, and *N_{PUCCH-1}* represents the resource quantity of the first resource.

In some implementations, when the second resource includes remaining resources other than resources occupied by the second part of information, the remaining resources in the second resource are configured to carry a UL-SCH.

In some implementations, the resource quantity of the first resource may be determined based on one or more of the following:
the number of resources required to be occupied by the first part of information; and
the number of resources required by other information in the UCI other than the CSI to occupy.

In some implementations, the communication module 1210 is further configured to:
receive first configuration information from a network device, the first configuration information being used to indicate one or more of the following:
a transmission manner of the UCI;
a multiplexing manner of CSI and UL-SCH on a PUSCH; and
configuration information of the first model.

In some implementations, the configuration information of the first model may be used to indicate one or more of the following:
a manner of determining the sequence length of the output sequence of the first model;
candidate lengths of the output sequence of the first model;
a maximum length of the output sequence of the first model;
an adjustment step of the sequence length of the output sequence of the first model;
an input format of the first model; and
generalization capability of the first model.

In some implementations, the communication module 1210 is further configured to:
send first capability information to the network device, the first capability information being used to indicate that the first terminal device supports the first configuration information.

In some implementations, the communication module 1210 is further configured to:
send second configuration information to the network device, the second configuration information being used to indicate one or more of the following:
candidate lengths of the output sequence of the first model;
a maximum length of the output sequence of the first model;
an adjustment step of the sequence length of the output sequence of the first model;
an input format of the first model; and
generalization capability of the first model.

In some implementations, the communication module 1210 is further configured to:
send second capability information to the network device, the second capability information being used to indicate that the first terminal device supports the second configuration information.

In some implementations, the communication module 1210 is further configured to:
send third capability information to the network device, the third capability information being used to indicate that the terminal device supports the first model.

In some implementations, switching from the first model to the first processing scheme may be triggered based on one or more of the following:
a first condition; and
a first timer;
where the first processing scheme is a second model different from the first model, or the first processing scheme is a non-model-based processing scheme.

In some implementations, whether the first condition is satisfied may be monitored by the terminal device or the network device.

In some implementations, the first part of information may include one or more of an RI, a CQI, and an LI.

In some implementations, the second part of information may include PMI.

In some implementations, a process of mapping information in the first resource to the first resource may include one or more of the following: code block segmentation, CRC attachment, channel coding, rate matching, symbol modulation, and resource mapping.

In some implementations, a process of mapping information in the second resource to the second resource may include performing resource mapping on the output sequence of the first model.

In some implementations, the first model is an artificial intelligence (AI)-based joint source-channel coding model.

FIG. 13 is a schematic structural diagram of a network device according to an embodiment of the present disclosure. A network device 1300 shown in FIG. 13 may be configured to perform steps performed by the network device in any one of the foregoing embodiments. The network device 1300 may include a communication module 1310. The communication module 1310 is configured to receive a first channel from a terminal device, where the first channel is configured to carry UCI, the UCI includes CSI, the first channel includes a first resource and a second resource, the first resource is configured to carry a first part of information in the CSI, the second resource is configured to carry a second part of information in the CSI, and the second part of information is determined based on an output sequence of a first model.

In some implementations, the sequence length of the output sequence is a first length, and the first length may be determined based on the resource quantity of the second resource.

In some implementations, a value of the first length is less than or equal to a first value, and the first value may be determined based on the resource quantity of the second resource.

In some implementations, the value of the first length is a maximum value that is less than or equal to the first value among values of candidate lengths of the output sequence.

In some implementations, the value of the first length is greater than or equal to the first value, and the first value may be determined based on the resource quantity of the second resource.

In some implementations, the value of the first length is a minimum value that is greater than or equal to the first value among values of candidate lengths of the output sequence.

In some implementations, the value of the first length may be determined based on configuration information of the network device.

In some implementations, the configuration information of the network device is used to configure a maximum value of the sequence length of the output sequence, and the maximum value of the sequence length of the output sequence is less than the first value, the first value being determined based on the resource quantity of the second resource.

In some implementations, the first resource is further configured to carry first information other than the CSI.

In some implementations, the first information may include one or more of the following:
a HARQ-ACK; and
an SR.

In some implementations, the first channel is a PUCCH, and the resource quantity of the second resource may be determined based on one or more of the following:
the resource quantity of the first resource; and
the number of resources in the first channel for transmitting the UCI.

In some implementations, the resource quantity of the second resource satisfies the following formula:
${N}_{PUCCH - 2} = {N}_{PUCCH} - {N}_{PUCCH - 1} ;$
where *N_{PUCCH-2}* represents the resource quantity of the second resource, *N_{PUCCH}* represents the number of resources in the first channel for transmitting the UCI, and *N_{PUCCH-1}* represents the resource quantity of the first resource.

In some implementations, the first channel is a PUSCH, and the resource quantity of the second resource may be determined based on one or more of the following:
the number of resources in the first channel for carrying a reference signal;
the resource quantity of the first resource;
the number of resources reserved for UL-SCH in the first channel; and
the resource quantity of the first channel.

In some implementations, the resource quantity of the second resource satisfies the following formula:
${N}_{PUSCH - 2} = {N}_{PUSCH} - {N}_{UL - SCH} - {N}_{PUSCH - 1} ;$
where *N_{PUSCH-2}* represents the resource quantity of the second resource, *N_{PUSCH}* represents the number of remaining resources in the first channel other than resources used for carrying a reference signal, *N_{UL-SCH}* represents the number of resources reserved for UL-SCH in the first channel, and *N_{PUSCH-1}* represents the resource quantity of the first resource.

In some implementations, the resource quantity of the second resource satisfies the following formula:
${N}_{PUSCH - 2} = {N}_{PUSCH} - {N}_{PUSCH - 1} ;$
where *N_{PUSCH-2}* represents the resource quantity of the second resource, *N_{PUSCH}* represents the number of remaining resources in the first channel other than resources used for carrying a reference signal, and *N_{PUSCH-1}* represents the resource quantity of the first resource.

In some implementations, when the second resource includes remaining resources other than resources occupied by the second part of information, the remaining resources in the second resource are configured to carry a UL-SCH.

In some implementations, the resource quantity of the first resource may be determined based on one or more of the following:
the number of resources required to be occupied by the first part of information;
the number of resources required by other information in the UCI other than the CSI to occupy.

In some implementations, the communication module 1310 is further configured to:
send first configuration information to the terminal device, where the first configuration information is used to indicate one or more of the following:
a transmission manner of the UCI;
a multiplexing manner of CSI and UL-SCH on a PUSCH; and
configuration information of the first model.

In some implementations, the configuration information of the first model is used to indicate one or more of the following:
a manner of determining a sequence length of the output sequence of the first model;
candidate lengths of the output sequence of the first model;
a maximum length of the output sequence of the first model;
an adjustment step of the sequence length of the output sequence of the first model;
an input format of the first model;
generalization capability of the first model.

In some implementations, the communication module 1310 is further configured to:
receive first capability information from the terminal device, where the first capability information is used to indicate that the first terminal device supports the first configuration information.

In some implementations, the communication module 1310 is further configured to:
receive second configuration information from the terminal device, where the second configuration information is used to indicate one or more of the following:
candidate lengths of the output sequence of the first model;
a maximum length of the output sequence of the first model;
an adjustment step of a sequence length of the output sequence of the first model;
an input format of the first model; and
generalization capability of the first model.

In some implementations, the communication module 1310 is further configured to:
receive second capability information from the terminal device, where the second capability information is used to indicate that the first terminal device supports the second configuration information.

In some implementations, the communication module 1310 is further configured to:
receive third capability information from the terminal device, where the third capability information is used to indicate that the terminal device supports the first model.

In some implementations, switching from the first model to a first processing scheme may be triggered based on one or more of the following:
a first condition; and
a first timer;
where the first processing scheme is a second model different from the first model, or the first processing scheme is a non-model-based processing scheme.

In some implementations, whether the first condition is satisfied may be monitored by the terminal device or the network device.

In some implementations, the first part of information may include one or more of an RI, a CQI, and an LI.

In some implementations, the second part of information may include a PMI.

In some implementations, the first model is an AI-based joint source-channel coding model.

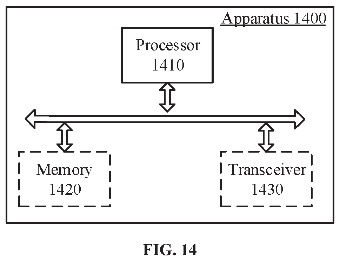

FIG. 14 is a schematic structural diagram of an apparatus according to an embodiment of the present disclosure. A dashed line in FIG. 14 indicates that the unit or module is optional. The apparatus 1400 may be configured to implement the methods described in the foregoing method embodiments. The apparatus 1400 may be a chip, a terminal device, or a network device.

The apparatus 1400 may include one or more processors 1410. The processor 1410 may support the apparatus 1400 in implementing the methods described in the foregoing method embodiments. The processor 1410 may be a general-purpose processor or a dedicated processor. For example, the processor may be a central processing unit (CPU). Alternatively, the processor may also be another general-purpose processor, a digital signal processor (DSP), an application specific integrated circuit (ASIC), a field programmable gate array (FPGA) or another programmable logic device, a discrete gate or transistor logic device, a discrete hardware component, or the like. A general-purpose processor may be a microprocessor or the processor may also be any conventional processor or the like.

The apparatus 1400 may further include one or more memories 1420. A program is stored on the memory 1420, and the program may be executed by the processor 1410, so that the processor 1410 performs the methods described in the foregoing method embodiments. The memory 1420 may be independent of the processor 1410 or integrated in the processor 1410.

The apparatus 1400 may further include a transceiver 1430. The processor 1410 may communicate with another device or chip via the transceiver 1430. For example, the processor 1410 may transmit and receive data to and from another device or chip via the transceiver 1430.

An embodiment of the present disclosure further provides a computer-readable storage medium, configured to store a program. The computer-readable storage medium may be applied to the communication device provided in the embodiments of the present disclosure, and the program enables a computer to perform the method performed by the terminal device or the network device in each embodiment of the present disclosure.

An embodiment of the present disclosure further provides a computer program product. The computer program product includes a program. The computer program product may be applied to the communication device provided in the embodiments of the present disclosure, and the program enables a computer to perform the method performed by the terminal device or the network device in each embodiment of the present disclosure.

An embodiment of the present disclosure further provides a computer program. The computer program may be applied to the communication device provided in the embodiments of the present disclosure, and the computer program enables a computer to perform the method performed by the terminal device or the network device in each embodiment of the present disclosure.

It should be understood that the terms "system" and "network" in the present disclosure may be used interchangeably. In addition, the terms used in the present disclosure are only used to explain specific embodiments of the present disclosure, and are not intended to limit the present disclosure. The terms "first", "second", "third", "fourth", and the like in the specification and claims of the present disclosure and the accompanying drawings are used to distinguish different objects, rather than describing a specific sequence. In addition, the terms "include" and "have" as well as any variations thereof are intended to cover non-exclusive inclusion.

In the embodiments of the present disclosure, the "indication" mentioned may be a direct indication, an indirect indication, or representation of an association relationship. For example, A indicates B may represent that A directly indicates B, for example, B may be obtained through A; may also represent that A indirectly indicates B, for example, A indicates C, and B may be obtained through C; and may also represent that an association relationship exists between A and B.

In the embodiments of the present disclosure, "B corresponding to A" indicates that B is associated with A, and B can be determined according to A. However, it should also be understood that determining B according to A does not mean that B is determined only according to A, and B may also be determined according to A and/or other information.

In the embodiments of the present disclosure, the term "corresponding" may indicate a direct correspondence or indirect correspondence between two, may also indicate an association relationship between two, or may be a relationship such as indication and indicated, configuration and configured, or the like.

In the embodiments of the present disclosure, "predefined" or "preconfigured" may be implemented by pre-saving corresponding codes, tables, or other manners that may be used to indicate relevant information in a device (for example, including a terminal device and a network device), and the present disclosure does not limit a specific implementation manner thereof. For example, predefined may be defined in a protocol.

In the embodiments of the present disclosure, the "protocol" may refer to a standard protocol in the communication field, for example, may include an LTE protocol, an NR protocol, and a related protocol applied to a future communication system, which is not limited in the present disclosure.

The term "and/or" in the embodiments of the present disclosure is merely an association relationship for describing associated objects, and indicates that three relationships may exist. For example, A and/or B may indicate the following three cases: A exists alone, A and B exist simultaneously, and B exists alone. In addition, the character "j" herein generally indicates that associated objects are in an "or" relationship.

In various embodiments of the present disclosure, the sequence numbers of the foregoing processes do not mean an execution order, and the execution order of the processes should be determined based on functions and internal logic thereof, and should not constitute any limitation on an implementation process of the embodiments of the present disclosure.

In several embodiments provided in the present disclosure, it should be understood that the disclosed system, apparatuses, and methods may be implemented in other manners. For example, the apparatus embodiments described above are merely schematic. For example, the division of the units is only a logical function division, and there may be another division during actual implementation. For example, a plurality of units or components may be combined or integrated into another system, or some features may be ignored or not performed. In addition, the mutual coupling or direct coupling or communication connection shown or discussed may be implemented through some interfaces, and the indirect coupling or communication connection of the apparatus or unit may be in an electrical, mechanical, or other form.

The units described as separate components may or may not be physically separated, and the components shown as units may or may not be physical units, that is, may be located in one place, or may be distributed to a plurality of network units. Some or all of the units may be selected according to actual needs to achieve the objectives of the solutions of the embodiments.

In addition, functional units in various embodiments of the present disclosure may be integrated into one processing unit, or each of the units may exist alone physically, or two or more units may be integrated into one unit.

In the foregoing embodiments, the embodiments may be implemented entirely or partially by software, hardware, firmware, or any combination thereof. When implemented by software, the embodiments may be implemented entirely or partially in a form of a computer program product. The computer program product includes one or more computer instructions. When the computer instructions are loaded and executed on a computer, the processes or functions according to the embodiments of the present disclosure are generated entirely or partially. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, or a digital subscriber line (DSL)) or wireless (such as infrared, wireless, or microwave) manner. The computer-readable storage medium may be any available medium that can be read by a computer or a data storage device such as a server or data center including one or more available media integrated therein. The available medium may be a magnetic medium (such as a floppy disk, a hard disk, or a magnetic tape), an optical medium (such as a digital video disc (DVD)), or a semiconductor medium (such as a solid-state disk (SSD)).

The foregoing descriptions are merely specific implementations of the present disclosure, but the protection scope of the present disclosure is not limited thereto. A person skilled in the art can readily conceive variations or replacements within the technical scope disclosed in the present disclosure, which shall all fall within the protection scope of the present disclosure. Therefore, the protection scope of the present disclosure shall be subject to the protection scope of the claims.

## Claims

1. A method of uplink transmission, comprising:
transmitting, by a terminal device, a first channel, wherein the first channel is configured to carry uplink control information (UCI), the UCI comprises channel state information (CSI), and the first channel comprises a first resource and a second resource, the first resource being configured to carry a first part of information in the CSI, and the second resource being configured to carry a second part of information in the CSI, and the second part of information being determined based on an output sequence of a first model.

2. The method of claim 1, wherein a sequence length of the output sequence is a first length, and the first length is determined based on a resource quantity of the second resource.

3. The method of claim 2, wherein a value of the first length is less than or equal to a first value, and the first value is determined based on the resource quantity of the second resource.

4. The method of claim 3, wherein the value of the first length is a maximum value less than or equal to the first value among values of candidate lengths of the output sequence.

5. The method of claim 2, wherein a value of the first length is greater than or equal to a first value, and the first value is determined based on the resource quantity of the second resource.

6. The method of claim 5, wherein the value of the first length is a minimum value greater than or equal to the first value among values of candidate lengths of the output sequence.

7. The method of claim 2, wherein a value of the first length is determined based on configuration information of a network device.

8. The method of claim 7, wherein the configuration information of the network device is used to configure a maximum value of the sequence length of the output sequence, and the maximum value of the sequence length of the output sequence is less than a first value, and the first value is determined based on the resource quantity of the second resource.

9. The method of any one of claims 1 to 8, wherein the first resource is further configured to carry first information other than the CSI.

10. The method of claim 9, wherein the first information comprises at least one of:
a Hybrid automatic repeat request-acknowledgement (HARQ-ACK); or
a Scheduling request (SR).

11. The method of any one of claims 1 to 10, wherein the first channel is a physical uplink control channel (PUCCH), and a resource quantity of the second resource is determined based on at least one of:
a resource quantity of the first resource; or
a number of resources, in the first channel, for transmitting the UCI.

12. The method of claim 11, wherein the resource quantity of the second resource satisfies a following formula: ${N}_{PUCCH - 2} = {N}_{PUCCH} - {N}_{PUCCH - 1} ;$ wherein *N_{PUCCH-2}* represents the resource quantity of the second resource, *N_{PUCCH}* represents the number of resources, in the first channel, for transmitting the UCI, and *N_{PUCCH-1}* represents the resource quantity of the first resource.

13. The method of any one of claims 1 to 10, wherein the first channel is a physical uplink shared channel (PUSCH), and a resource quantity of the second resource is determined based on one or more of:
a number of resources, in the first channel, for carrying a reference signal;
a resource quantity of the first resource;
a number of resources, in the first channel, reserved for an uplink shared channel (UL-SCH); and
a resource quantity of the first channel.

14. The method of claim 13, wherein the resource quantity of the second resource satisfies a following formula: ${N}_{PUSCH - 2} = {N}_{PUSCH} - {N}_{UL - SCH} - {N}_{PUSCH - 1} ;$ wherein *N_{PUSCH-2}* represents the resource quantity of the second resource, *N_{PUSCH}* represents a number of remaining resources in the first channel other than the resources carrying a reference signal, *N_{UL-SCH}* represents the number of resources reserved for a UL-SCH in the first channel, and *N_{PUSCH-1}* represents the resource quantity of the first resource.

15. The method of claim 13, wherein the resource quantity of the second resource satisfies a following formula: ${N}_{PUSCH - 2} = {N}_{PUSCH} - {N}_{PUSCH - 1} ;$ wherein *N_{PUSCH-2}* represents the resource quantity of the second resource, *N_{PUSCH}* represents a number of remaining resources in the first channel other than the resources carrying a reference signal, and *N_{PUSCH-1}* represents the resource quantity of the first resource.

16. The method of any one of claims 11 to 15, wherein when the second resource comprises a remaining resource other than a resource occupied by the second part of information, the remaining resource of the second resource is configured to carry a UL-SCH.

17. The method of any one of claims 11 to 16, wherein the resource quantity of the first resource is determined based on at least one of:
a number of resources required to be occupied by the first part of information; or
a number of resources required to be occupied by information other than the CSI in the UCI.

18. The method of any one of claims 1 to 17, further comprising:
receiving, by the terminal device, first configuration information from the network device, wherein the first configuration information is used to indicate one or more of:
a transmission manner of the UCI;
a multiplexing manner of CSI and a UL-SCH on a PUSCH; and
configuration information of the first model.

19. The method of claim 18, wherein the configuration information of the first model is used to indicate one or more of:
a manner of determining a sequence length of the output sequence of the first model;
candidate lengths of the output sequence of the first model;
a maximum length of the output sequence of the first model;
an adjustment step of the sequence length of the output sequence of the first model;
an input format of the first model; and
a generalization capbility of the first model.

20. The method of claim 18 or 19, further comprising:
transmitting, by the terminal device, first capability information to the network device, wherein the first capability information is used to indicate that the first terminal device supports the first configuration information.

21. The method of any one of claims 1 to 17, further comprising:
transmitting, by the terminal device, second configuration information to a network device, the second configuration information being used to indicate one or more of:
candidate lengths of the output sequence of the first model;
a maximum length of the output sequence of the first model;
an adjustment step of a sequence length of the output sequence of the first model;
an input format of the first model; and
a generalization capbility of the first model.

22. The method of claim 21, further comprising:
transmitting, by the terminal device, second capability information to the network device, wherein the second capability information is used to indicate that the first terminal device supports the second configuration information.

23. The method of any one of claims 1 to 22, further comprising:
transmitting, by the terminal device, third capability information to a network device, wherein the third capability information is used to indicate that the terminal device supports the first model.

24. The method of any one of claims 1 to 23, wherein switching from the first model to a first processing scheme is triggered based on at least one of:
a first condition; or
a first timer;
wherein the first processing scheme is a second model different from the first model or the first processing scheme is a non-model-based processing scheme.

25. The method of claim 24, wherein whether the first condition is met is monitored by the terminal device or a network device.

26. The method of any one of claims 1 to 25, wherein the first part of information comprises one or more of: a rank indication (RI), a channel quality indication (CQI), and a layer indication (LI).

27. The method of any one of claims 1 to 26, wherein the second part of information comprises a precoding matrix indication (PMI).

28. The method of any one of claims 1 to 27, wherein a mapping process of information in the first resource to the first resource comprises one or more of: code block segmentation, cyclic redundancy check (CRC) attachment, channel coding, rate matching, symbol modulation, and resource mapping.

29. The method of any one of claims 1 to 28, wherein a mapping process of information in the second resource to the second resource comprises: performing resource mapping on the output sequence of the first model.

30. The method of any one of claims 1 to 29, wherein the first model is an artificial intelligence (AI)-based joint source-channel coding model.

31. A method of uplink transmission, comprising:
receiving, by a network device, a first channel from a terminal device, wherein the first channel is configured to carry uplink control information (UCI), the UCI comprises channel state information (CSI), the first channel comprises a first resource and a second resource, the first resource is configured to carry a first part of information in the CSI, and the second resource is configured to carry a second part of information in the CSI, and the second part of information is determined based on an output sequence of a first model.

32. The method of claim 31, wherein a sequence length of the output sequence is a first length, and the first length is determined based on a resource quantity of the second resource.

33. The method of claim 32, wherein a value of the first length is less than or equal to a first value, and the first value is determined based on the resource quantity of the second resource.

34. The method of claim 33, wherein the value of the first length is a maximum value less than or equal to the first value among values of candidate lengths of the output sequence.

35. The method of claim 32, wherein a value of the first length is greater than or equal to a first value, and the first value is determined based on the resource quantity of the second resource.

36. The method of claim 35, wherein the value of the first length is a minimum value greater than or equal to the first value among values of candidate lengths of the output sequence.

37. The method of claim 32, wherein a value of the first length is determined based on configuration information of the network device.

38. The method of claim 37, wherein the configuration information of the network device is used to configure a maximum value of the sequence length of the output sequence, and the maximum value of the sequence length of the output sequence is less than a first value, and the first value is determined based on the resource quantity of the second resource.

39. The method of any one of claims 31 to 38, wherein the first resource is further configured to carry first information other than the CSI.

40. The method of claim 39, wherein the first information comprises at least one of:
a Hybrid automatic repeat request-acknowledgement (HARQ-ACK); or
a Scheduling request (SR).

41. The method of any one of claims 31 to 40, wherein the first channel is a physical uplink control channel (PUCCH), and the resource quantity of the second resource is determined based on at least one of:
a resource quantity of the first resource; or
a number of resources, in the first channel, for transmitting the UCI.

42. The method of claim 41, wherein the resource quantity of the second resource satisfies a following formula: ${N}_{PUCCH - 2} = {N}_{PUCCH} - {N}_{PUCCH - 1} ;$ wherein *N_{PUCCH-2}* represents the resource quantity of the second resource, *N_{PUCCH}* represents the number of resources, in the first channel, for transmitting the UCI, and *N_{PUCCH-1}* represents the resource quantity of the first resource.

43. The method of any one of claims 31 to 40, wherein the first channel is a physical uplink shared channel (PUSCH), and the resource quantity of the second resource is determined based on one or more of:
a number of resources, in the first channel, for carrying a reference signal;
a resource quantity of the first resource;
a number of resources, in the first channel, reserved for an uplink shared channel (UL-SCH); and
a resource quantity of the first channel.

44. The method of claim 43, wherein the resource quantity of the second resource satisfies a following formula: ${N}_{PUSCH - 2} = {N}_{PUSCH} - {N}_{UL - SCH} - {N}_{PUSCH - 1} ;$ wherein *N_{PUSCH-2}* represents the resource quantity of the second resource, *N_{PUSCH}* represents a number of remaining resources in the first channel other than the resources carrying a reference signal, *N_{UL-SCH}* represents the number of resources reserved for a UL-SCH in the first channel, and *N_{PUSCH-1}* represents the resource quantity of the first resource.

45. The method of claim 43, wherein the resource quantity of the second resource satisfies a following formula: ${N}_{PUSCH - 2} = {N}_{PUSCH} - {N}_{PUSCH - 1} ;$ wherein *N_{PUSCH-2}* represents the resource quantity of the second resource, *N_{PUSCH}* represents a number of remaining resources in the first channel other than the resources carrying a reference signal, and *N_{PUSCH-1}* represents the resource quantity of the first resource.

46. The method of any one of claims 41 to 45, wherein when the second resource comprises a remaining resource other than a resource occupied by the second part of information, the remaining resource of the second resource is configured to carry a UL-SCH.

47. The method of any one of claims 41 to 46, wherein the resource quantity of the first resource is determined based on at least one of:
a number of resources required to be occupied by the first part of information; or
a number of resources required to be occupied by information other than the CSI in the UCI.

48. The method of any one of claims 31 to 47, further comprising:
transmitting, by the network device, first configuration information to the terminal device, the first configuration information being used to indicate one or more of:
a transmission manner of the UCI;
a multiplexing manner of CSI and a UL-SCH on a PUSCH; and
configuration information of the first model.

49. The method of claim 48, wherein the configuration information of the first model is used to indicate one or more of:
a manner of determining a sequence length of the output sequence of the first model;
candidate lengths of the output sequence of the first model;
a maximum length of the output sequence of the first model;
an adjustment step of the sequence length of the output sequence of the first model;
an input format of the first model; and
a generalization capbility of the first model.

50. The method of claim 48 or 49, further comprising:
receiving, by the network device, first capability information from the terminal device, wherein the first capability information is used to indicate that the first terminal device supports the first configuration information.

51. The method of any one of claims 31 to 47, further comprising:
receiving, by the network device, second configuration information from the terminal device, wherein the second configuration information is used to indicate one or more of:
candidate lengths of the output sequence of the first model;
a maximum length of the output sequence of the first model;
an adjustment step of a sequence length of the output sequence of the first model;
an input format of the first model; and
a generalization capbility of the first model.

52. The method of claim 51, further comprising:
receiving, by the network device, second capability information from the terminal device, wherein the second capability information is used to indicate that the first terminal device supports the second configuration information.

53. The method of any one of claims 31 to 52, further comprising:
receiving, by the network device, third capability information from the terminal device, wherein the third capability information is used to indicate that the terminal device supports the first model.

54. The method of any one of claims 31 to 53, wherein switching from the first model to a first processing scheme is triggered based on at least one of:
a first condition; or
a first timer;
wherein the first processing scheme is a second model different from the first model or the first processing scheme is a non-model-based processing scheme.

55. The method of claim 54, wherein whether the first condition is met is monitored by the terminal device or the network device.

56. The method of any one of claims 31 to 55, wherein the first part of information comprises one or more of: a rank indication (RI), a channel quality indication (CQI), and a layer indication (LI).

57. The method of any one of claims 31 to 56, wherein the second part of information comprises a precoding matrix indication (PMI).

58. The method of any one of claims 31 to 57, wherein the first model is an artificial intelligence (AI)-based joint source-channel coding model.

59. A terminal device, comprising:
a communication module, configured to transmit a first channel, wherein the first channel is configured to carry uplink control information (UCI), the UCI comprises channel state information (CSI), the first channel comprises a first resource and a second resource, the first resource being configured to carry a first part of information in the CSI, and the second resource being configured to carry a second part of information in the CSI, and the second part of information being determined based on an output sequence of a first model.

60. The terminal device of claim 59, wherein a sequence length of the output sequence is a first length, and the first length is determined based on a resource quantity of the second resource.

61. The terminal device of claim 60, wherein a value of the first length is less than or equal to a first value, and the first value is determined based on the resource quantity of the second resource.

62. The terminal device of claim 61, wherein the value of the first length is a maximum value less than or equal to the first value among values of candidate lengths of the output sequence.

63. The terminal device of claim 60, wherein a value of the first length is greater than or equal to a first value, and the first value is determined based on the resource quantity of the second resource.

64. The terminal device of claim 63, wherein the value of the first length is a minimum value greater than or equal to the first value among values of candidate lengths of the output sequence.

65. The terminal device of claim 60, wherein a value of the first length is determined based on configuration information of a network device.

66. The terminal device of claim 65, wherein the configuration information of the network device is used to configure a maximum value of a sequence length of the output sequence, and the maximum value of the sequence length of the output sequence is smaller than a first value, and the first value is determined based on the resource quantity of the second resource.

67. The terminal device of any one of claims 59 to 66, wherein the first resource is further configured to carry first information other than the CSI.

68. The terminal device of claim 67, wherein the first information comprises at least one of:
a Hybrid automatic repeat request-acknowledgement (HARQ-ACK); or
a Scheduling request (SR).

69. The terminal device of any one of claims 59 to 68, wherein the first channel is a physical uplink control channel (PUCCH), and a resource quantity of the second resource is determined based on at least one of:
a resource quantity of the first resource; or
a number of resources, in the first channel, for transmitting the UCI.

70. The terminal device of claim 69, wherein a resource quantity of the second resource satisfies a following formula: ${N}_{PUCCH - 2} = {N}_{PUCCH} - {N}_{PUCCH - 1} ;$ wherein *N_{PUCCH-2}* represents the resource quantity of the second resource, *N_{PUCCH}* represents the number of resources, in the first channel, for transmitting the UCI, and *N_{PUCCH-1}* represents the resource quantity of the first resource.

71. The terminal device of any one of claims 59 to 68, wherein the first channel is a physical uplink shared channel (PUSCH), and a resource quantity of the second resource is determined based on one or more of:
a number of resources, in the first channel, for carrying a reference signal;
a resource quantity of the first resource;
a number of resources, in the first channel, reserved for an uplink shared channel (UL-SCH); and
a resource quantity of the first channel.

72. The terminal device of claim 71, wherein a resource quantity of the second resource satisfies a following formula: ${N}_{PUSCH - 2} = {N}_{PUSCH} - {N}_{UL - SCH} - {N}_{PUSCH - 1} ;$ wherein *N_{PUSCH-2}* represents the resource quantity of the second resource, *N_{PUSCH}* represents a number of remaining resources in the first channel other than the resources carrying a reference signal, *N_{UL-SCH}* represents the number of resources reserved for a UL-SCH in the first channel, and *N_{PUSCH-1}* represents the resource quantity of the first resource.

73. The terminal device of claim 71, wherein a resource quantity of the second resource satisfies a following formula: ${N}_{PUSCH - 2} = {N}_{PUSCH} - {N}_{PUSCH - 1} ;$ wherein *N_{PUSCH-2}* represents the resource quantity of the second resource, *N_{PUSCH}* represents a number of remaining resources in the first channel other than the resources carrying a reference signal, and *N_{PUSCH-1}* represents the resource quantity of the first resource.

74. The terminal device of any one of claims 69 to 73, wherein when the second resource comprises a remaining resource other than a resource occupied by the second part of information, the remaining resource of the second resource is configured to carry a UL-SCH.

75. The terminal device of any one of claims 69 to 74, wherein the resource quantity of the first resource is determined based on at least one of:
a number of resources required to be occupied by the first part of information; or
a number of resources required to be occupied by information other than the CSI in the UCI.

76. The terminal device of any one of claims 59 to 75, wherein the communication module is further configured to:
receive first configuration information from the network device, wherein the first configuration information is used to indicate one or more of:
a transmission manner of the UCI;
a multiplexing manner of CSI and a UL-SCH on a PUSCH; and
configuration information of the first model.

77. The terminal device of claim 76, wherein the configuration information of the first model is used to indicate one or more of:
a manner of determining a sequence length of the output sequence of the first model;
candidate lengths of the output sequence of the first model;
a maximum length of the output sequence of the first model;
an adjustment step of the sequence length of the output sequence of the first model;
an input format of the first model; and
a generalization capbility of the first model.

78. The terminal device of claim 76 or 77, wherein the communication module is further configured to:
transmit first capability information to the network device, the first capability information being used to indicate that the first terminal device supports the first configuration information.

79. The terminal device of any one of claims 59 to 75, wherein the communication module is further configured to:
transmit second configuration information to a network device, the second configuration information being used to indicate one or more of:
candidate lengths of the output sequence of the first model;
a maximum length of the output sequence of the first model;
an adjustment step of a sequence length of the output sequence of the first model;
an input format of the first model; and
a generalization capbility of the first model.

80. The terminal device of claim 79, wherein the communication module is further configured to:
transmit second capability information to the network device, the second capability information being used to indicate that the first terminal device supports the second configuration information.

81. The terminal device of any one of claims 59 to 80, wherein the communication module is further configured to:
transmit third capability information to a network device, the third capability information being used to indicate that the terminal device supports the first model.

82. The terminal device of any one of claims 59 to 81, wherein switching from the first model to a first processing scheme is triggered based on at least one of:
a first condition; or
a first timer;
wherein the first processing scheme is a second model different from the first model or the first processing scheme is a non-model-based processing scheme.

83. The terminal device of claim 82, wherein whether the first condition is satisfied is monitored by the terminal device or a network device.

84. The terminal device of any one of claims 59 to 83, wherein the first part of information comprises one or more of: a rank indication (RI), a channel quality indication (CQI), and a layer indication (LI).

85. The terminal device of any one of claims 59 to 84, wherein the second part of information comprises a precoding matrix indication (PMI).

86. The terminal device of any one of claims 59 to 85, wherein a mapping process of information in the first resource to the first resource comprises one or more of: code block segmentation, cyclic redundancy check (CRC) attachment, channel coding, rate matching, symbol modulation, and resource mapping.

87. The terminal device of any one of claims 59 to 86, wherein a mapping process of information in the second resource to the second resource comprises: performing resource mapping on the output sequence of the first model.

88. The terminal device of any one of claims 59 to 87, wherein the first model is an artificial intelligence (AI)-based joint source-channel coding model.

89. A network device, comprising:
a communication module, configured to receive a first channel from a terminal device, wherein the first channel is configured to carry uplink control information (UCI), the UCI comprises channel state information (CSI), the first channel comprises a first resource and a second resource, the first resource is configured to carry a first part of information in the CSI, and the second resource is configured to carry a second part of information in the CSI, and the second part of information is determined based on an output sequence of a first model.

90. The network device of claim 89, wherein a sequence length of the output sequence is a first length, and the first length is determined based on a resource quantity of the second resource.

91. The network device of claim 90, wherein a value of the first length is less than or equal to a first value, and the first value is determined based on the resource quantity of the second resource.

92. The network device of claim 91, wherein the value of the first length is a maximum value less than or equal to the first value among values of candidate lengths of the output sequence.

93. The network device of claim 90, wherein a value of the first length is greater than or equal to a first value, and the first value is determined based on the resource quantity of the second resource.

94. The network device of claim 93, wherein the value of the first length is a minimum value greater than or equal to the first value among values of candidate lengths of the output sequence.

95. The network device of claim 90, wherein a value of the first length is determined based on configuration information of the network device.

96. The network device of claim 95, wherein the configuration information of the network device is used to configure a maximum value of a sequence length of the output sequence, and the maximum value of the sequence length of the output sequence is less than a first value, and the first value is determined based on the resource quantity of the second resource.

97. The network device of any one of claims 89 to 96, wherein the first resource is further configured to carry first information other than the CSI.

98. The network device of claim 97, wherein the first information comprises at least one of:
a Hybrid automatic repeat request-acknowledgement (HARQ-ACK); or
a Scheduling request (SR).

99. The network device of any one of claims 89 to 98, wherein the first channel is a physical uplink control channel (PUCCH), and a resource quantity of the second resource is determined based on at least one of:
a resource quantity of the first resource; or
a number of resources, in the first channel, for transmitting the UCI.

100. The network device of claim 99, wherein the resource quantity of the second resource satisfies a following formula: ${N}_{PUCCH - 2} = {N}_{PUCCH} - {N}_{PUCCH - 1} ;$ wherein *N_{PUCCH-2}* represents the resource quantity of the second resource, *N_{PUCCH}* represents the number of resources, in the first channel, for transmitting the UCI, and *N_{PUCCH-1}* represents the resource quantity of the first resource.

101. The network device of any one of claims 89 to 98, wherein the first channel is a physical uplink shared channel (PUSCH), and the resource quantity of the second resource is determined based on one or more of:
a number of resources, in the first channel, for carrying a reference signal;
a resource quantity of the first resource;
a number of resources, in the first channel, reserved for an uplink shared channel (UL-SCH); and
a resource quantity of the first channel.

102. The network device of claim 101, wherein a resource quantity of the second resource satisfies a following formula: ${N}_{PUSCH - 2} = {N}_{PUSCH} - {N}_{UL - SCH} - {N}_{PUSCH - 1} ;$ wherein *N_{PUSCH-2}* represents the resource quantity of the second resource, *N_{PUSCH}* represents a number of remaining resources in the first channel other than the resources carrying a reference signal, *N_{UL-SCH}* represents the number of resources reserved for a UL-SCH in the first channel, and *N_{PUSCH-1}* represents the resource quantity of the first resource.

103. The network device of claim 101, wherein a resource quantity of the second resource satisfies a following formula: ${N}_{PUSCH - 2} = {N}_{PUSCH} - {N}_{PUSCH - 1} ;$ wherein *N_{PUSCH-2}* represents the resource quantity of the second resource, *N_{PUSCH}* represents a number of remaining resources in the first channel other than the resources carrying a reference signal, and *N_{PUSCH-1}* represents the resource quantity of the first resource.

104. The network device of any one of claims 99 to 103, wherein when the second resource comprises a remaining resource other than a resource occupied by the second part of information, the remaining resource of the second resource is configured to carry a UL-SCH.

105. The network device of any one of claims 99 to 104, wherein the resource quantity of the first resource is determined based on at least one of:
a number of resources required to be occupied by the first part of information; or
a number of resources required to be occupied by information other than the CSI in the UCI.

106. The network device of any one of claims 89 to 105, wherein the communication module is further configured to:
transmit first configuration information to the terminal device, the first configuration information being used to indicate one or more of:
a transmission manner of the UCI;
a multiplexing manner of CSI and a UL-SCH on a PUSCH; and
configuration information of the first model.

107. The network device of claim 106, wherein the configuration information of the first model is used to indicate one or more of:
a manner of determining a sequence length of the output sequence of the first model;
candidate lengths of the output sequence of the first model;
a maximum length of the output sequence of the first model;
an adjustment step of the sequence length of the output sequence of the first model;
an input format of the first model; and
a generalization capbility of the first model.

108. The network device of claim 106 or 107, wherein the communication module is further configured to:
receive first capability information from the terminal device, wherein the first capability information is used to indicate that the first terminal device supports the first configuration information.

109. The network device of any one of claims 89 to 105, wherein the communication module is further configured to:
receive second configuration information from the terminal device, the second configuration information being used to indicate one or more of:
candidate lengths of the output sequence of the first model;
a maximum length of the output sequence of the first model;
an adjustment step of a sequence length of the output sequence of the first model;
an input format of the first model; and
a generalization capbility of the first model.

110. The network device of claim 109, wherein the communication module is further configured to:
receive second capability information from the terminal device, wherein the second capability information is used to indicate that the first terminal device supports the second configuration information.

111. The network device of any one of claims 89 to 110, wherein the communication module is further configured to:
receive third capability information from the terminal device, wherein the third capability information is used to indicate that the terminal device supports the first model.

112. The network device of any one of claims 89 to 111, wherein switching from the first model to a first processing scheme is triggered based on at least one of:
a first condition; or
a first timer;
wherein the first processing scheme is a second model different from the first model or the first processing scheme is a non-model-based processing scheme.

113. The network device of claim 112, wherein whether the first condition is satisfied is monitored by the terminal device or the network device.

114. The network device of any one of claims 89 to 113, wherein the first part of information comprises one or more of: a rank indication (RI), a channel quality indication (CQI), and a layer indication (LI).

115. The network device of any one of claims 89 to 114, wherein the second part of information comprises a precoding matrix indication (PMI).

116. The network device of any one of claims 89 to 115, wherein the first model is an artificial intelligence (AI)-based joint source-channel coding model.

117. A terminal device, comprising: a transceiver, a memory for storing a program, and a processor for invoking the program in the memory and controlling the transceiver to receive or transmit signals to cause the terminal device to perform the method of any one of claims 1 to 30.

118. A network device, comprising: a transceiver, a memory for storing a program, and a processor for invoking the program in the memory and controlling the transceiver to receive or transmit signals to cause the network device to perform the method of any one of claims 31 to 58.

119. An apparatus, comprising: a processor for invoking a program from a memory to cause the apparatus to perform the method of any one of claims 1 to 30, or the method of any one of claims 31 to 58.

120. A chip, comprising: a processor for calling a program from a memory to cause an apparatus on which the chip is mounted to perform the method of any one of claims 1 to 30, or the method of any one of claims 31 to 58.

121. A computer-readable storage medium, having stored thereon a program that causes a computer to perform the method of any one of claims 1 to 30, or the method of any one of claims 31 to 58.

122. A computer program product, comprising a program that causes a computer to perform the method of any one of claims 1 to 30, or the method of any one of claims 31 to 58.

123. A computer program, causing a computer to perform the method of any one of claims 1 to 30, or the method of any one of claims 31 to 58.
